# EUROPEAN PATENT APPLICATION

(11) **EP 2 490 068 A1**
(43) Date of publication of application: **22.08.2012**
(21) Application number: 10823246.3
(22) Date of filing: 11.08.2010
(51) Int. Cl.: G02F 1/1368, G02F 1/133, G02F 1/1343, G09F 9/30, G09G 3/20, G09G 3/36

(54) **LIQUID CRYSTAL DISPLAY**

(30) Priority: 16.10.2009 JP 2009239758
(71) Applicant: Sharp Kabushiki Kaisha, Osaka-shi, Osaka 545-8522 (JP)
(72) Inventor: TSUBATA, Toshihide, Osaka-shi, Osaka 545-8522 (JP)
(74) Representative: Müller - Hoffmann & Partner
(86) International application number: PCT/JP2010/063647
(87) International publication number: WO 2011/045978

(57) **Abstract**

The present invention relates to a capacitively-coupled pixel-division liquid crystal display device. A liquid crystal display device includes rows and columns of pixels each containing two pixel electrodes connected to each other via a capacitor, each of the columns of pixels being provided with two data signal lines (Sx, Sy) corresponding thereto, each of the rows of pixels being provided with a single scanning line (Gn) and a single sub-signal line (gn) both corresponding thereto, one of the two pixel electrodes of each of the pixels belonging to the columns of pixels and the rows of pixels being connected to the data signal line (Sx) via a transistor connected to the scanning signal line (Gn), the other pixel electrode being connected to a retention capacitor wire via a transistor connected to the sub-signal line (gn), two scanning signal lines (Gn, G(n+1)) corresponding to two rows of pixels upstream of a scanning direction among four consecutive rows of pixels and two sub-signal lines (g(n+2), g(n+3)) corresponding to two rows of pixels downstream of the scanning direction among the four consecutive rows of pixels being simultaneously selected. The present invention makes it possible to achieve suppression of pixel image sticking and a reduction in load on the scanning signal lines.

## Description

### Technical Field

The present invention relates to a capacitively-coupled pixel-division liquid crystal display device, a capacitively-coupled pixel-division active-matrix substrate, etc.

### Background Art

A capacitively-coupled pixel-division active-matrix substrate includes pixels each having provided therein two pixel electrodes capacitively coupled to each other, with one of the pixel electrodes connected to a data signal line via a transistor. In this configuration, the other pixel electrode (the pixel electrode not connected to a data signal line), which is electrically floating, is easily subject to a DC voltage. This causes pixel image sticking.

In this regard, Patent Literature 1 (see Fig. 40) discloses a configuration in which with two discharging transistors 421 and 422 connected to the scanning signal line 112(n-1) of the previous stage, the pixel electrodes 121a to 121c of the current stage are discharged by connecting the pixel electrodes 121a to 121c to an extension 424 of an auxiliary capacitor wire during scanning of the previous stage (before scanning of the current stage). This configuration allows none of the pixel electrodes to be electrically floating, thus making it possible to suppress pixel image sticking.

### Citation List

Patent Literature 1
   Japanese Patent Application Publication, Tokukai, No. 2006-39290 A (Publication Date: February 9, 2006)

### Summary of Invention

### Technical Problem

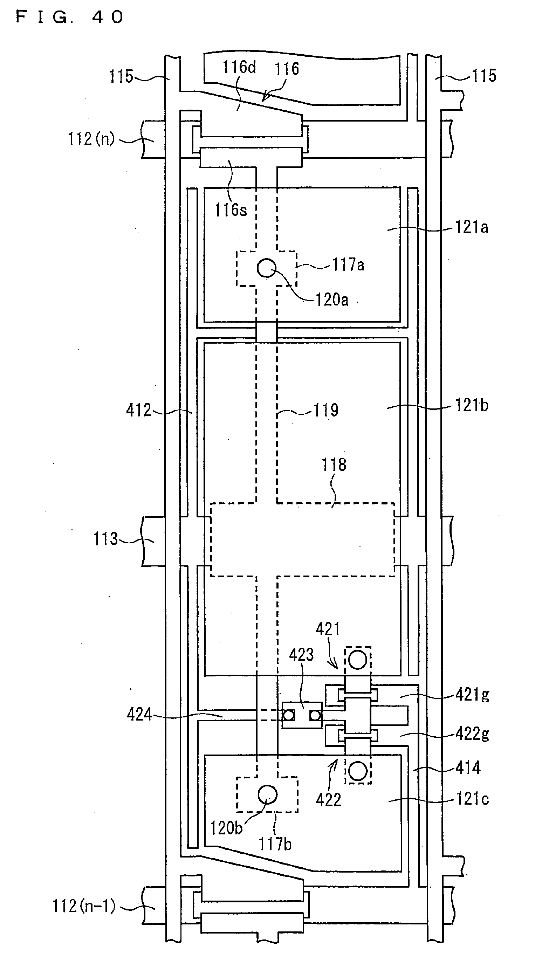

However, the configuration of Fig. 40, in which three transistors per pixel (one transistor for writing of the current stage and two transistors for discharging the pixel electrodes of the next stage) is connected to each single scanning signal line, imposes overload on the scanning signal lines, and as such, is unsuitable for a large-sized high-definition liquid crystal display device or a high-speed-driven (e.g., double-speed-driven) liquid crystal display device.

The present invention is designed to achieve both suppression of pixel image sticking and a reduction in load on the scanning signal lines.

### Solution to Problem

A liquid crystal display device according to the present invention includes rows and columns of pixels each containing two pixel electrodes connected to each other via a capacitor, with each data signal line extending in a column-wise direction, each of the columns of pixels being provided with two data signal lines corresponding thereto, each of the rows of pixels being provided with a single scanning line and a single sub-signal line both corresponding thereto, one of the two pixel electrodes of each of the pixels belonging to the columns of pixels and the rows of pixels being connected to either of the two data signal lines via a transistor connected to the scanning signal line, the other pixel electrode being connected to a retention capacitor wire via a transistor connected to the sub-signal line, two scanning signal lines corresponding to two rows of pixels upstream of a scanning direction among four consecutive rows of pixels and two sub-signal lines corresponding to two rows of pixels downstream of the scanning direction among the four consecutive rows of pixels being simultaneously selected.

Since, in the liquid crystal display device according to the present invention, each pixel contains two pixel electrodes one of which is connected to a data signal line via a transistor and the other one of which is connected to a retention capacitor wire via a transistor, there is no pixel electrode in the pixel that is electrically floating. Therefore, such problems as pixel image sticking that the capacitively-coupled pixel-division type has suffered from can be suppressed.

Moreover, since one transistor per pixel is connected to each scanning signal line, the load on each scanning signal line is reduced as compared with such a configuration as that of Fig. 40, the configuration according to the present invention is suitable for a large-sized high-definition liquid crystal display device and a high-speed-driven (e.g., double-speed-driven or quadruple-speed-driven) liquid crystal display device.

### Advantageous Effects of Invention

The present invention makes it possible to achieve both suppression of pixel image sticking and a reduction in load on the scanning signal lines.

### Brief Description of Drawings

Fig. 1

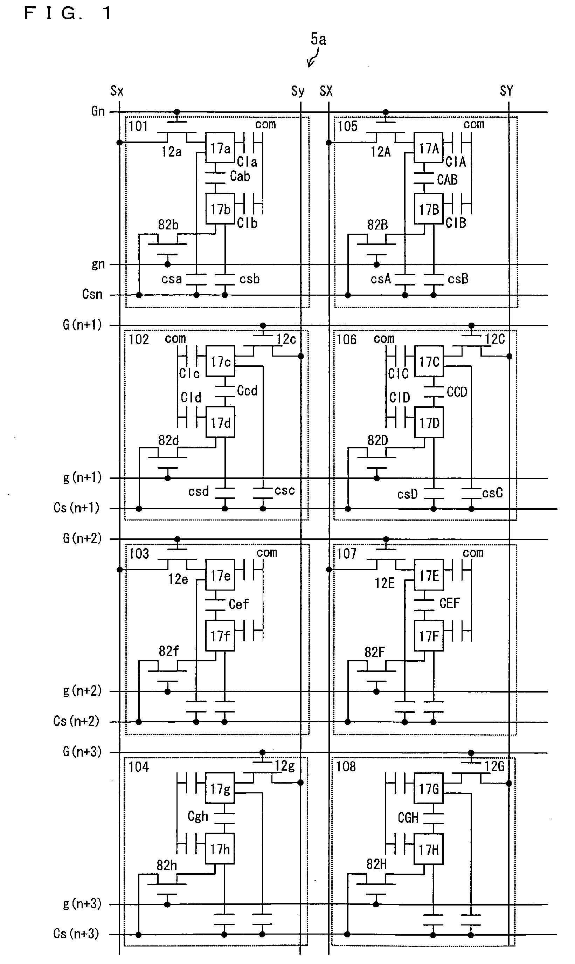

   Fig. 1 is a circuit diagram showing a configuration of a liquid crystal panel according to Embodiment 1.
Fig. 2

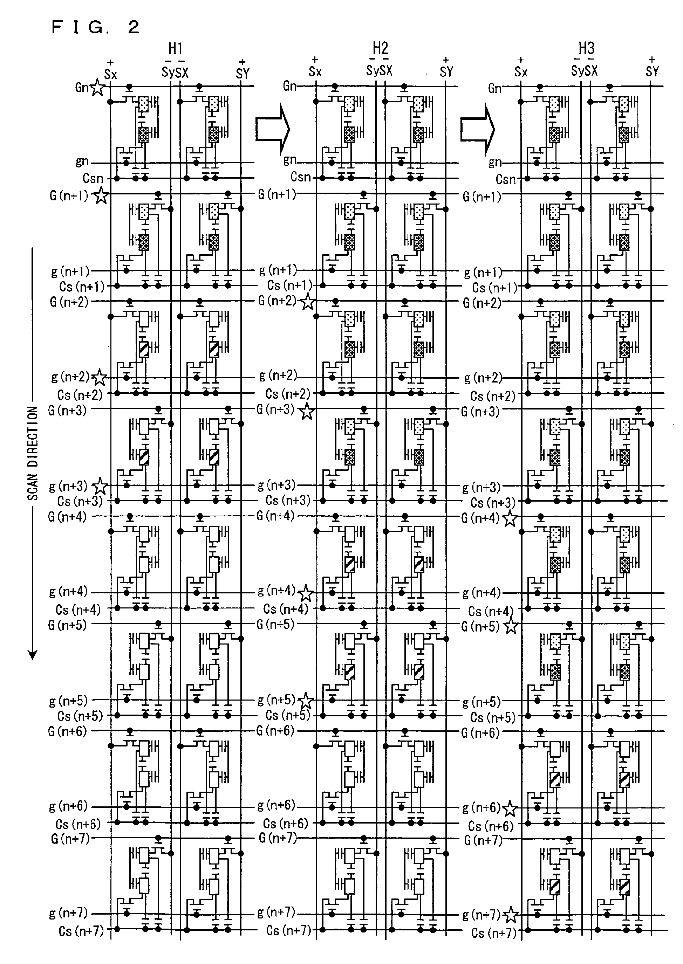

   Fig. 2 is a timing chart showing a method for driving the liquid crystal panel of Fig. 1.
Fig. 3

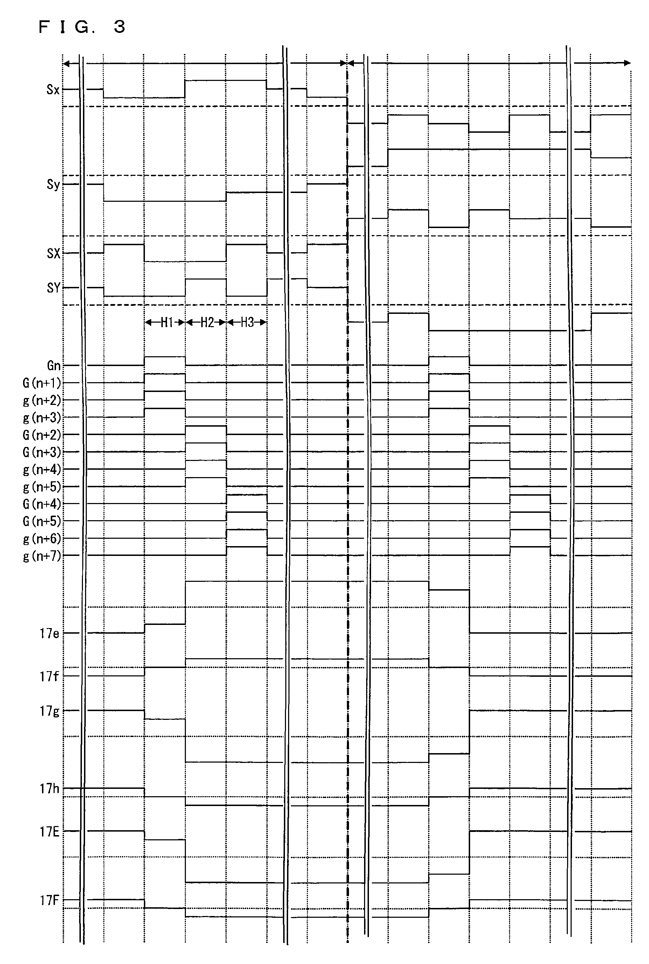

   Fig. 3 is a schematic view explaining the states H 1 to H3 of Fig. 2.
Fig. 4

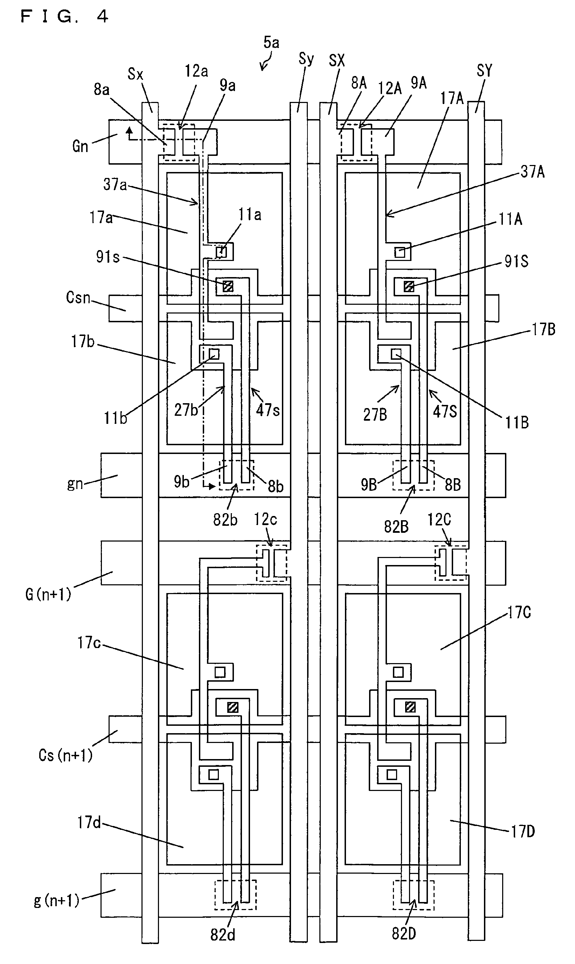

   Fig. 4 is a plan view specifically showing the configuration of the liquid crystal panel of Fig. 1.
Fig. 5

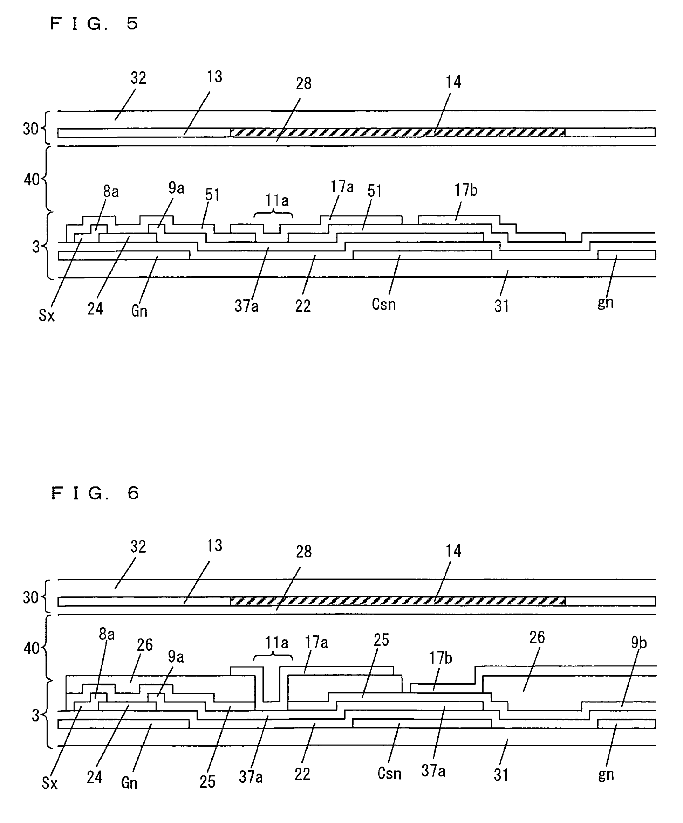

   Fig. 5 is a cross-sectional view taken in the arrow of Fig. 4 (in the case of a thin interlayer insulating film).
Fig. 6
   Fig. 6 is a cross-sectional view taken in the arrow of Fig. 4 (in the case of a thick interlayer insulating film).
Fig. 7

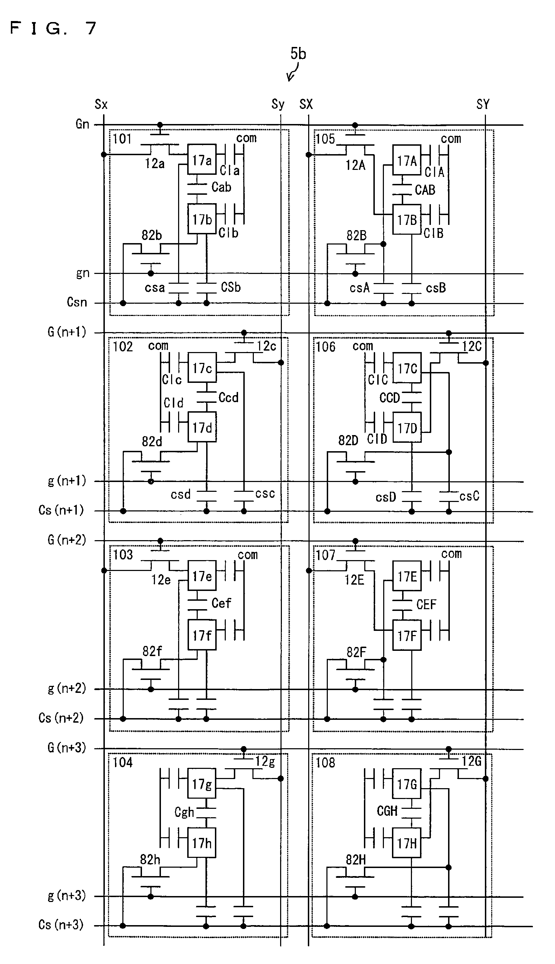

   Fig. 7 is a circuit diagram showing a configuration of another liquid crystal panel according to Embodiment 1.
Fig. 8

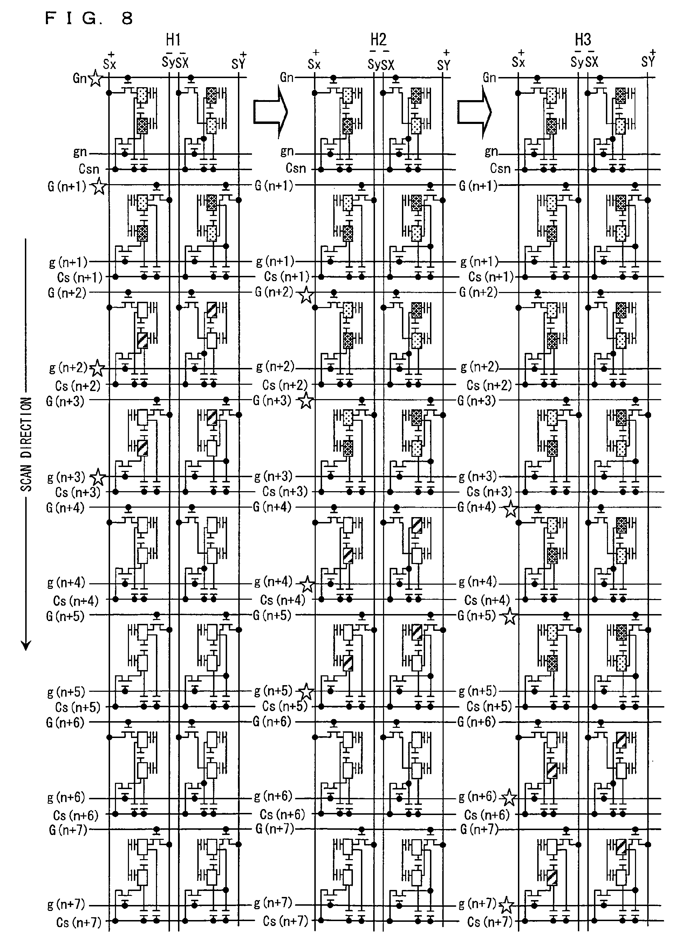

   Fig. 8 is a timing chart showing a method for driving the liquid crystal panel of Fig. 7.
Fig. 9

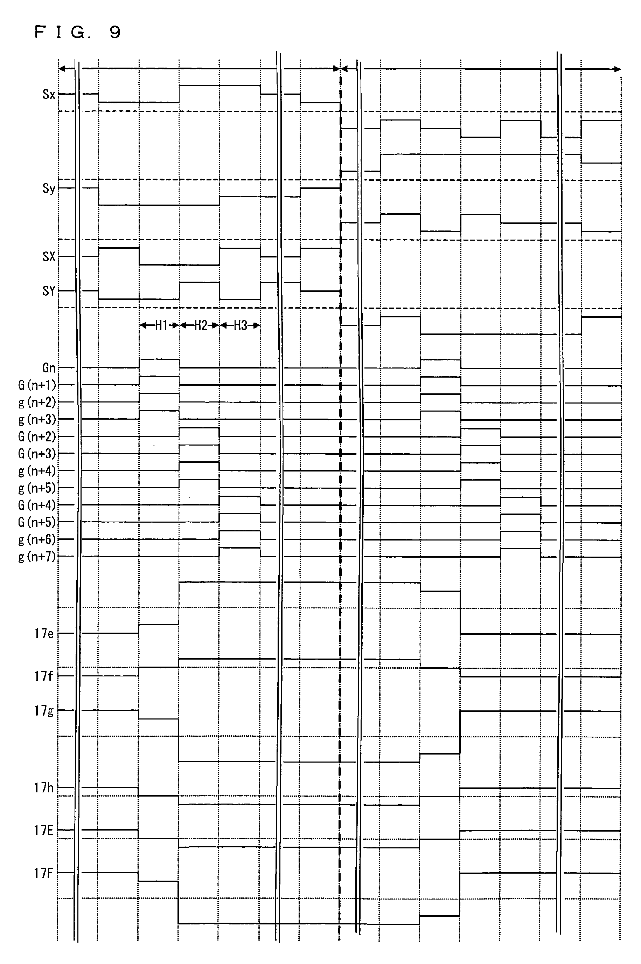

   Fig. 9 is a schematic view explaining the states H 1 to H3 of Fig. 8.
Fig. 10

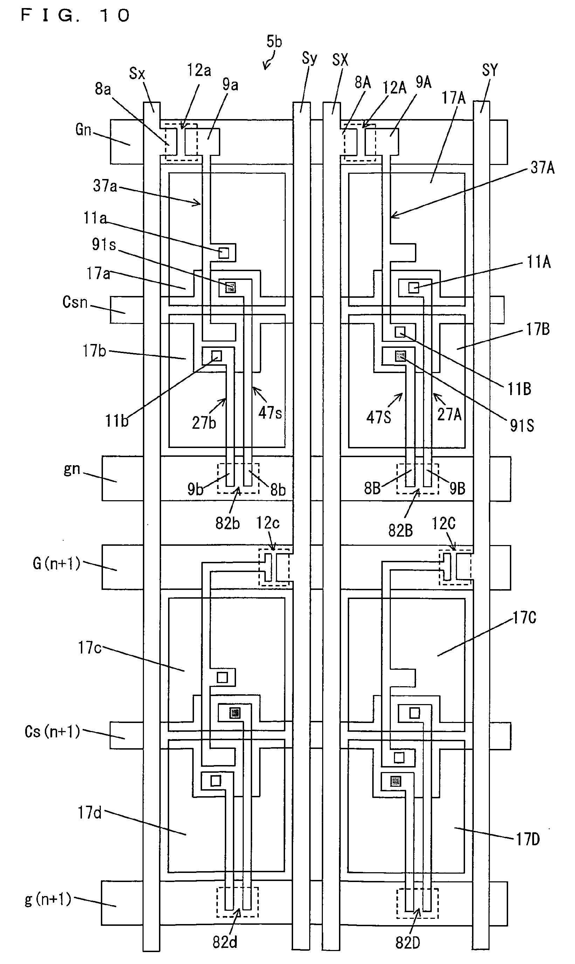

   Fig. 10 is a plan view specifically showing the configuration of the liquid crystal panel of Fig. 7.
Fig. 11

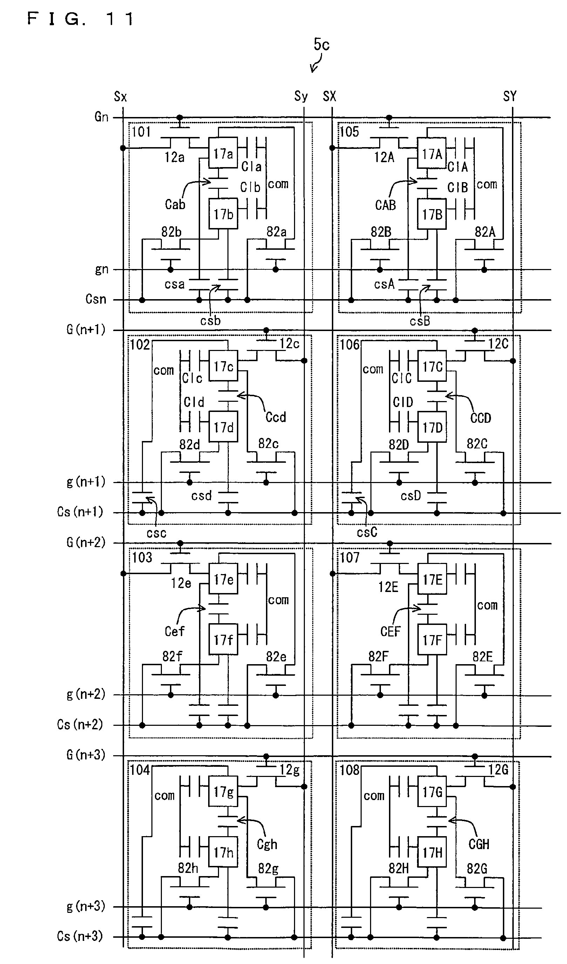

   Fig. 11 is a circuit diagram showing a configuration of a liquid crystal panel according to Embodiment 2.
Fig. 12

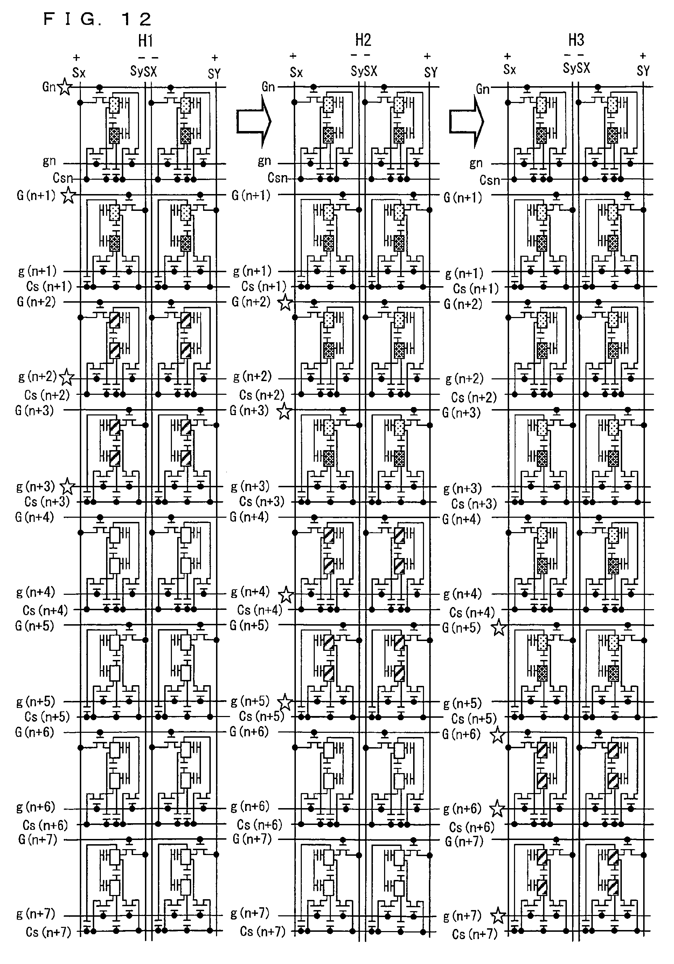

   Fig. 12 is a timing chart showing a method for driving the liquid crystal panel of Fig. 11.
Fig. 13

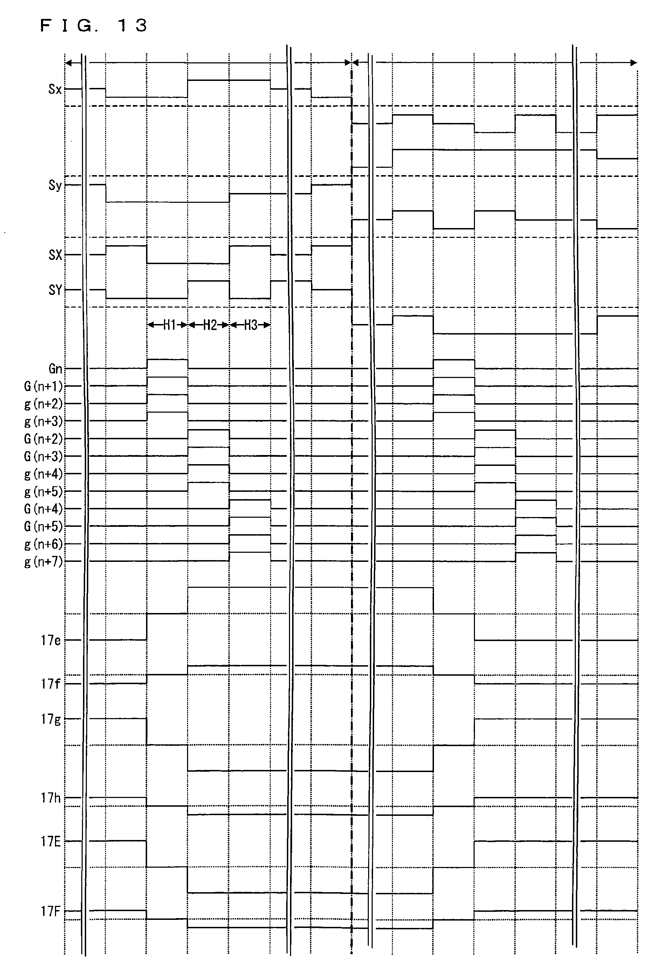

   Fig. 13 is a schematic view explaining the states H 1 to H3 of Fig. 12.
Fig. 14

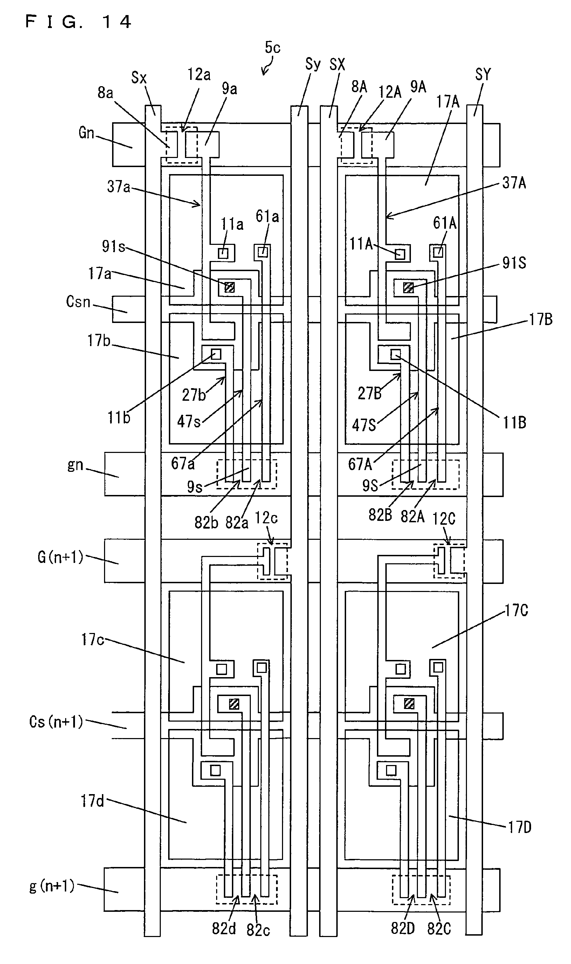

   Fig. 14 is a plan view specifically showing the configuration of the liquid crystal panel of Fig. 11.
Fig. 15

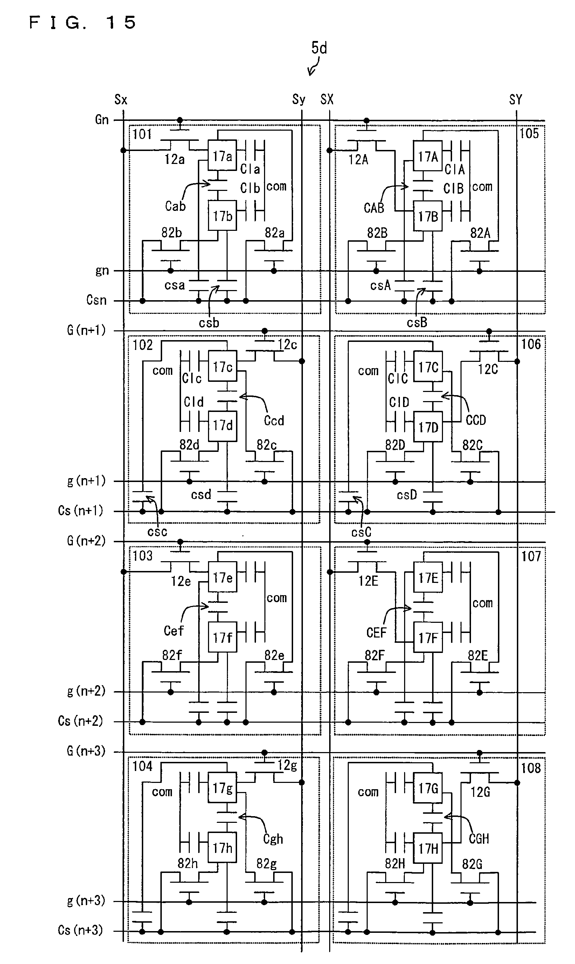

   Fig. 15 is a circuit diagram showing a configuration of another liquid crystal panel according to Embodiment 2.
Fig. 16

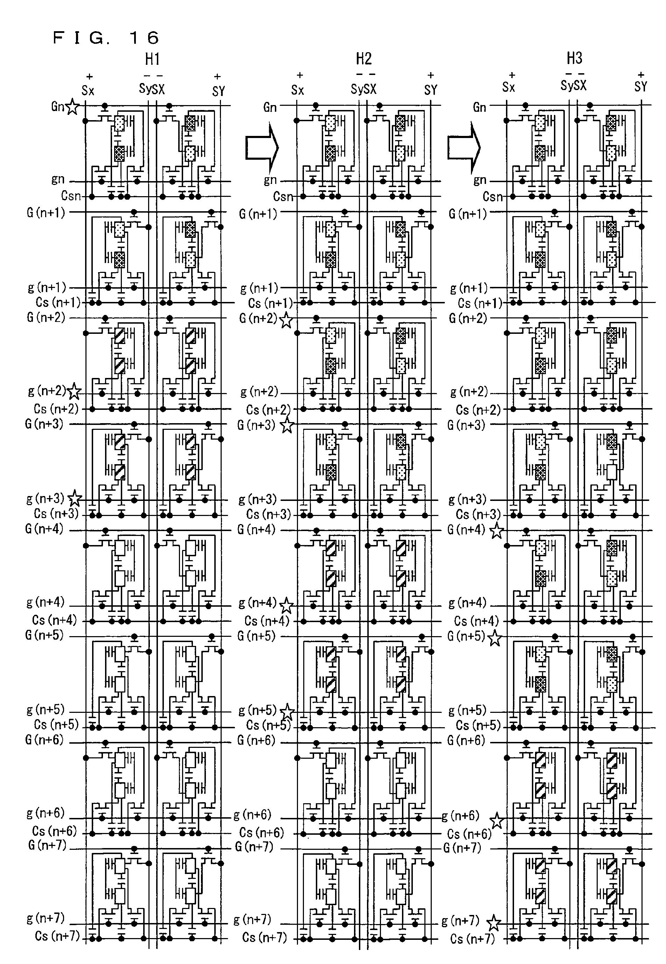

   Fig. 16 is a timing chart showing a method for driving the liquid crystal panel of Fig. 15.
Fig. 17

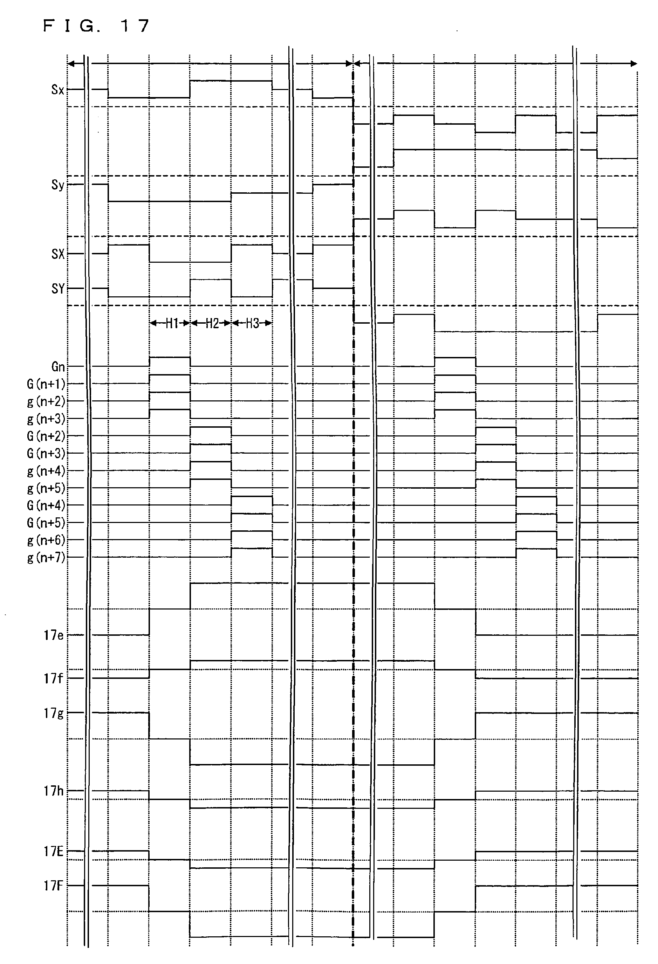

   Fig. 17 is a schematic view explaining the states H 1 to H3 of Fig. 16.
Fig. 18

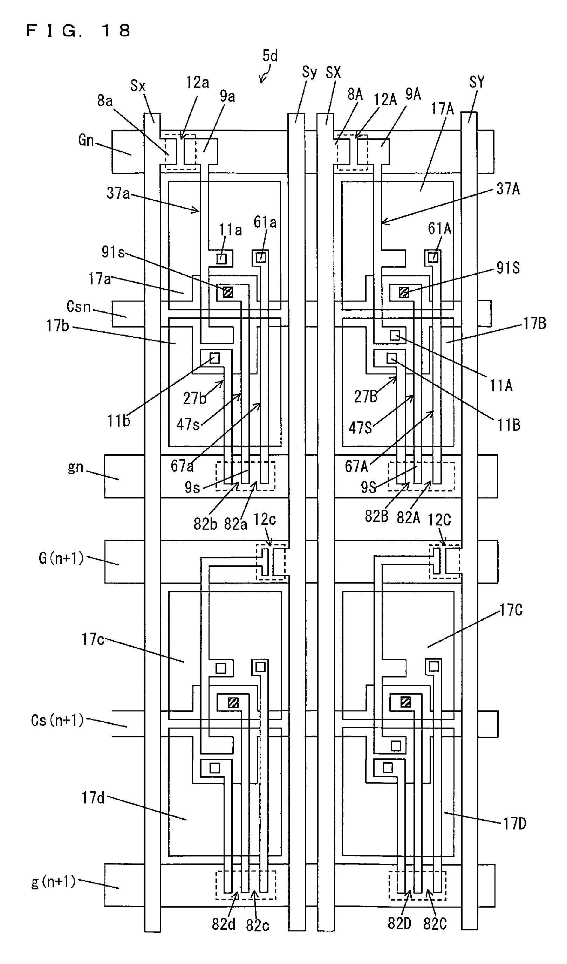

   Fig. 18 is a plan view specifically showing the configuration of the liquid crystal panel of Fig. 15.
Fig. 19

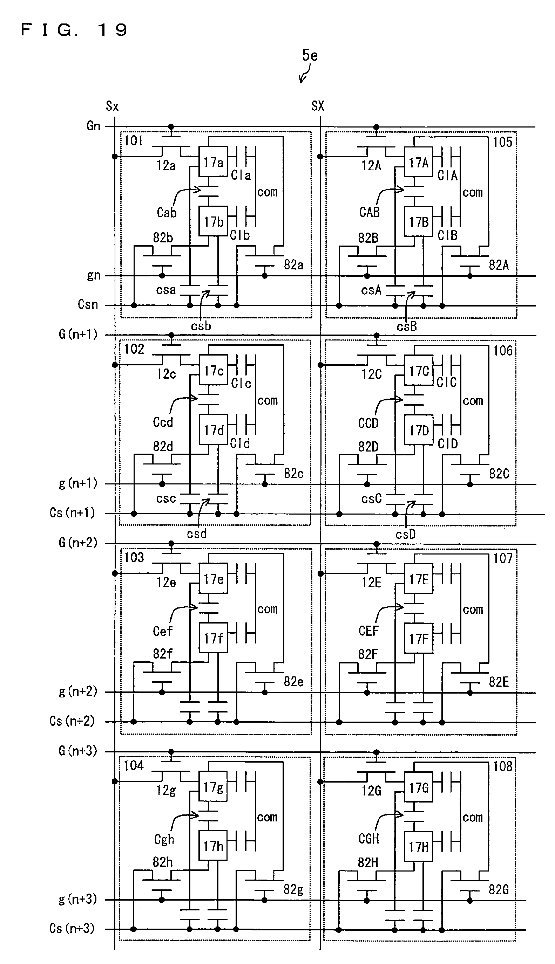

   Fig. 19 is a circuit diagram showing a configuration of a liquid crystal panel according to Embodiment 3.
Fig. 20

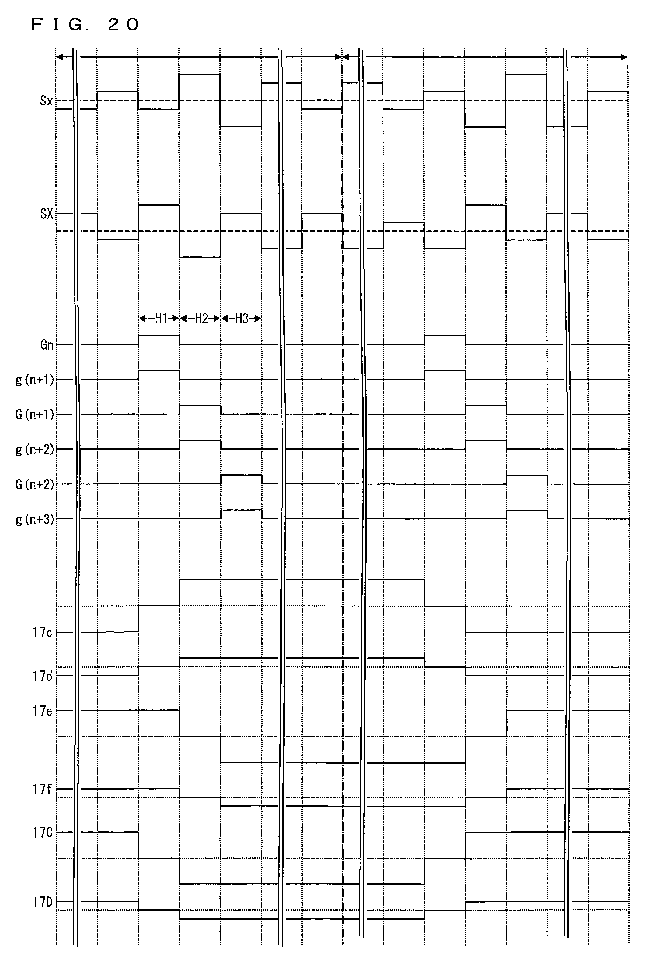

   Fig. 20 is a timing chart showing a method for driving the liquid crystal panel of Fig. 19.
Fig. 21

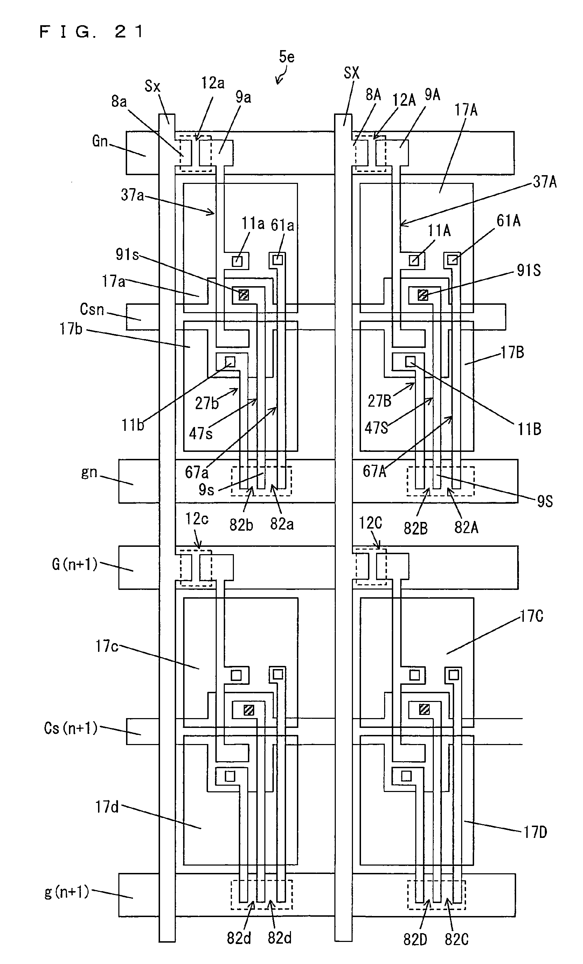

   Fig. 21 is a plan view specifically showing the configuration of the liquid crystal panel of Fig. 19.
Fig. 22

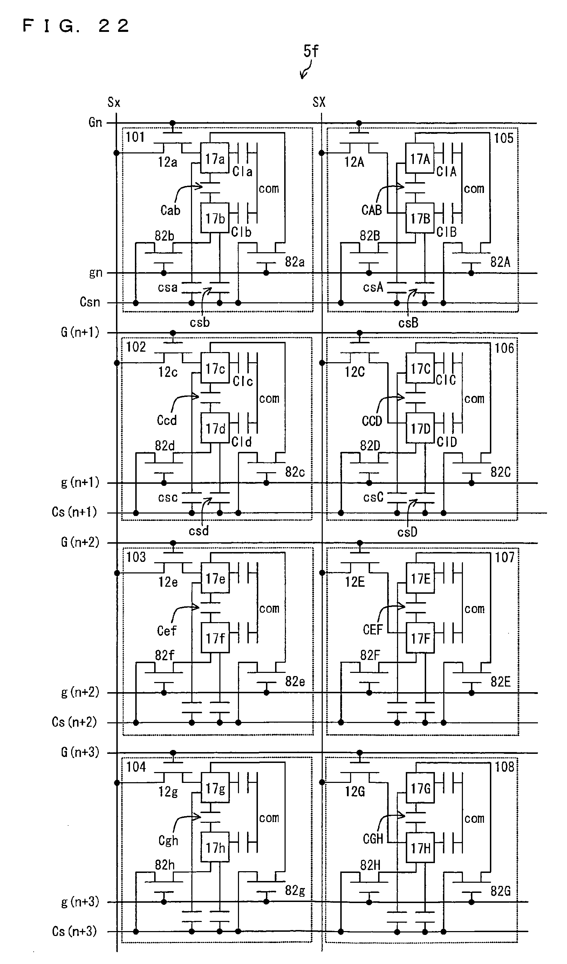

   Fig. 22 is a circuit diagram showing a configuration of another liquid crystal panel according to Embodiment 3.
Fig. 23

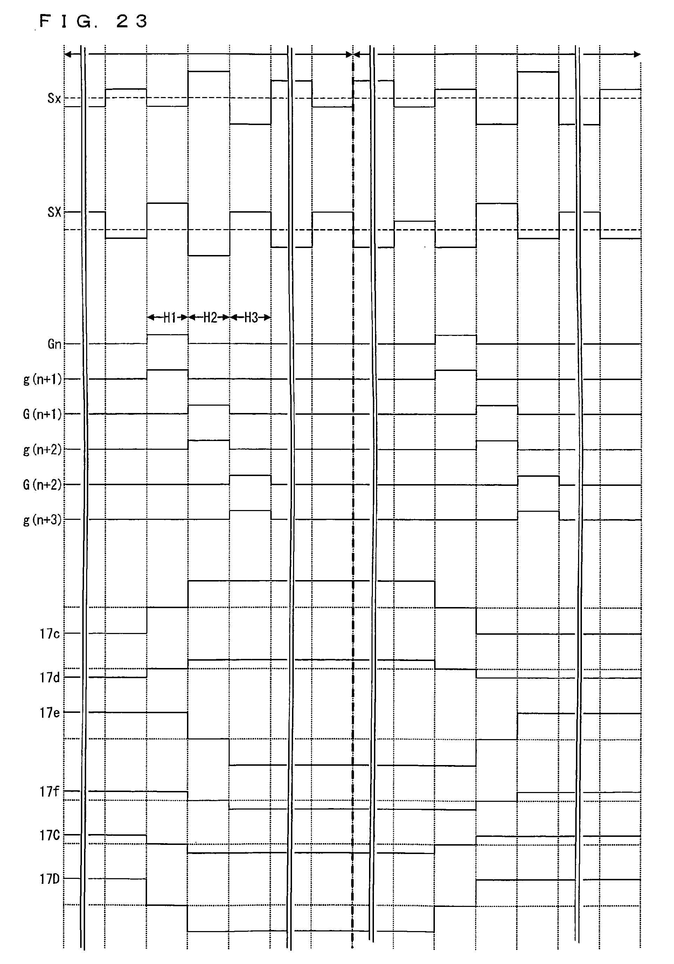

   Fig. 23 is a timing chart showing a method for driving the liquid crystal panel of Fig. 22.
Fig. 24

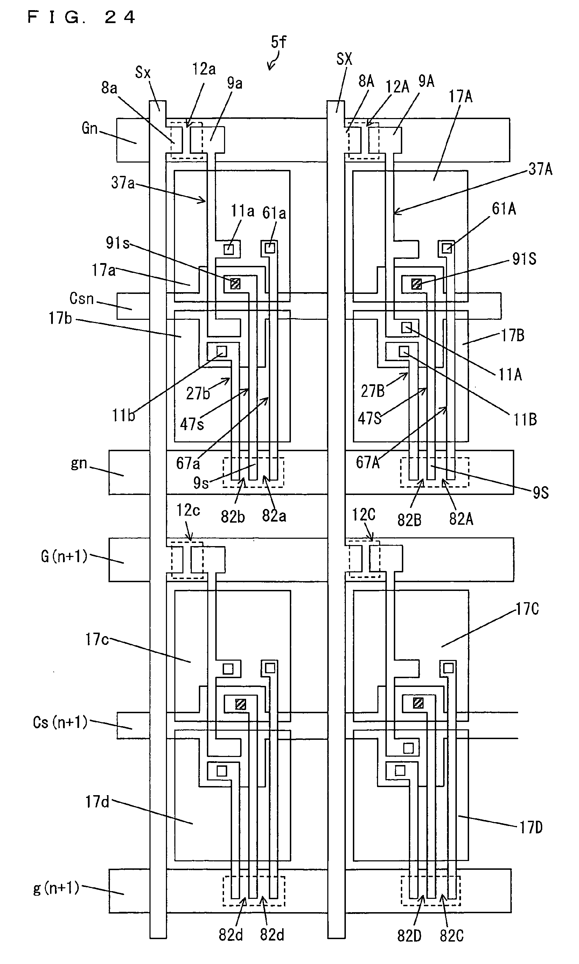

   Fig. 24 is a plan view specifically showing the configuration of the liquid crystal panel of Fig. 22.
Fig. 25

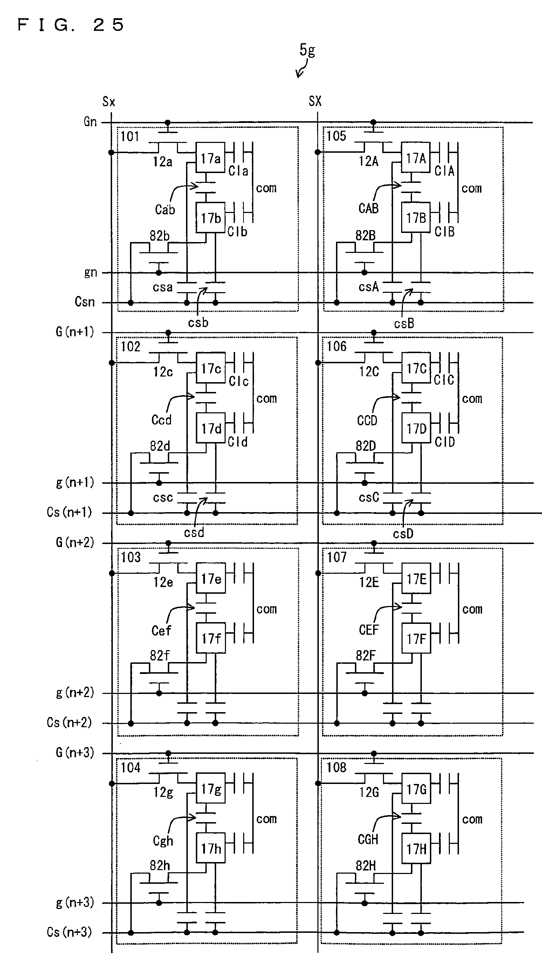

   Fig. 25 is a circuit diagram showing a configuration of a liquid crystal panel according to Embodiment 4.
Fig. 26

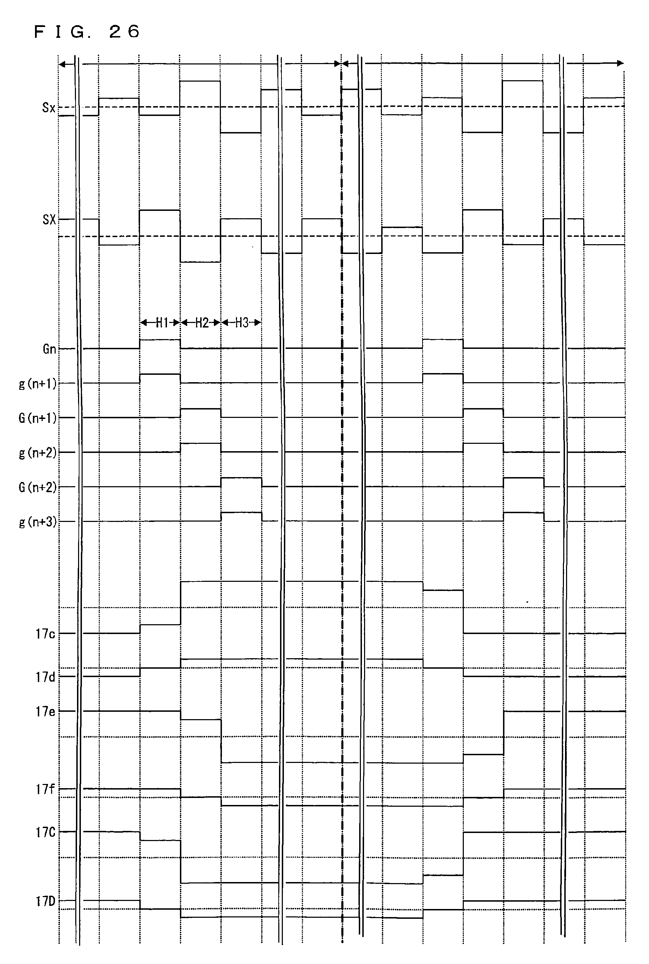

   Fig. 26 is a timing chart showing a method for driving the liquid crystal panel of Fig. 25.
Fig. 27

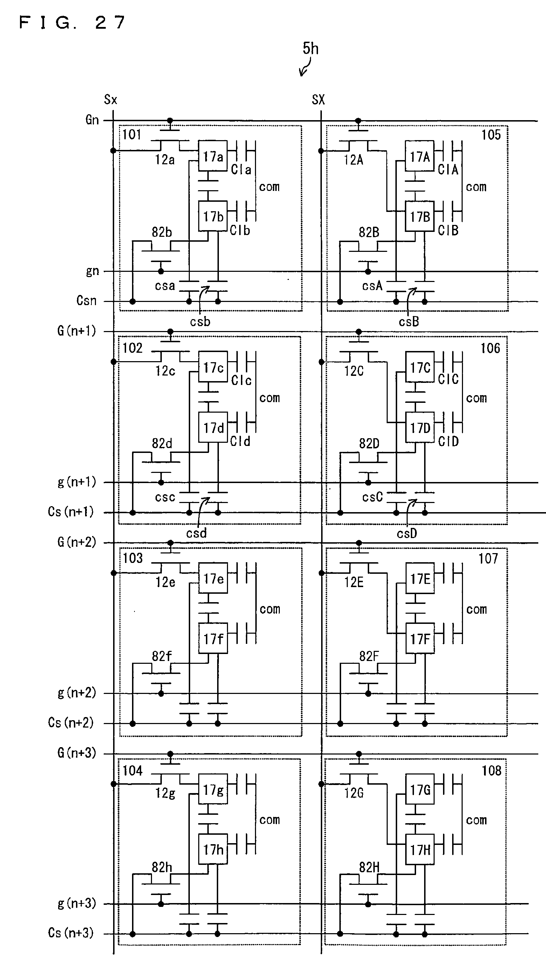

   Fig. 27 is a circuit diagram showing a configuration of another liquid crystal panel according to Embodiment 4.
Fig. 28

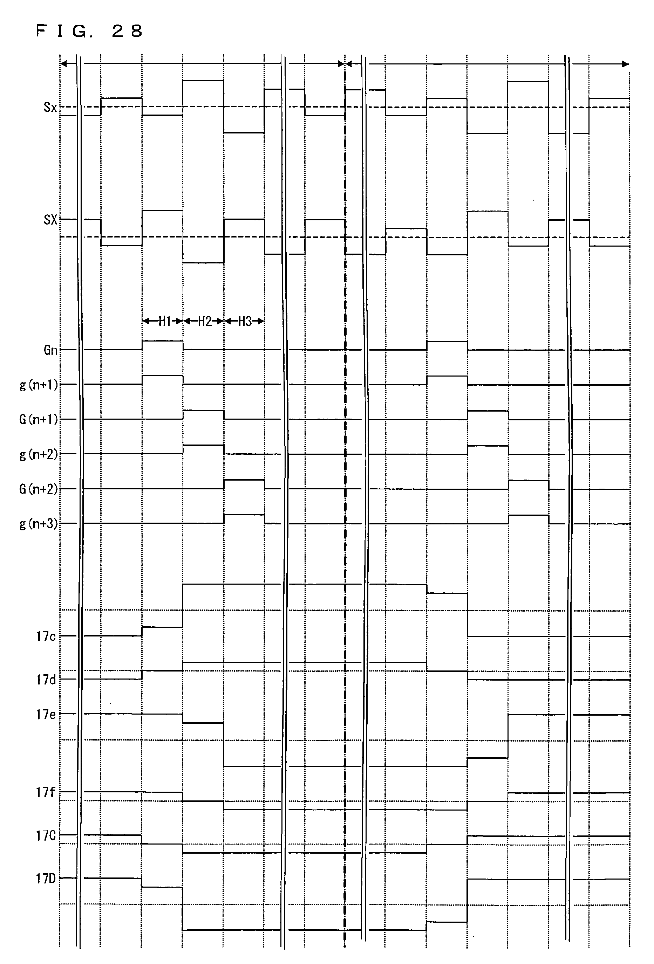

   Fig. 28 is a timing chart showing a method for driving the liquid crystal panel of Fig. 27.
Fig. 29

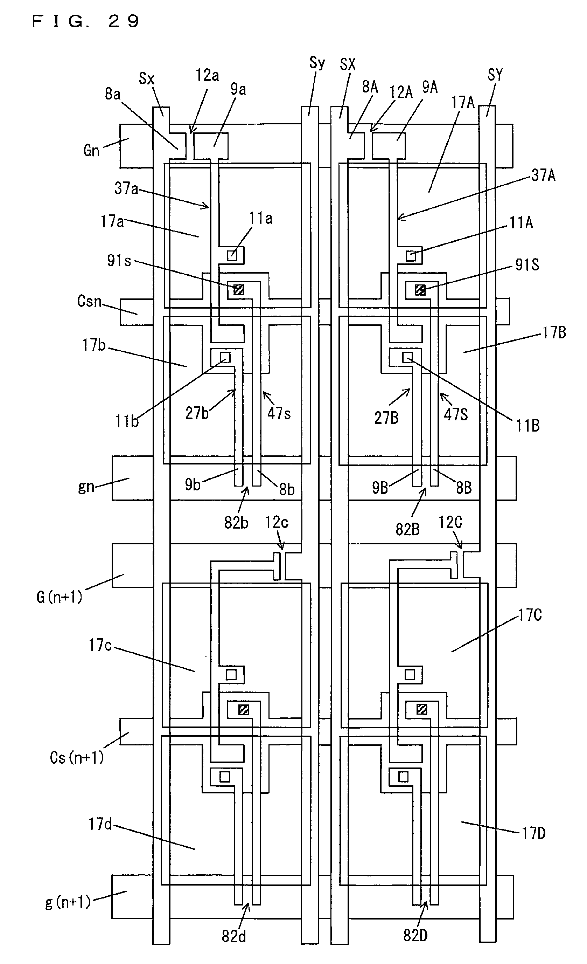

   Fig. 29 is a plan view showing another configuration of the liquid crystal panel of Fig. 1.
Fig. 30

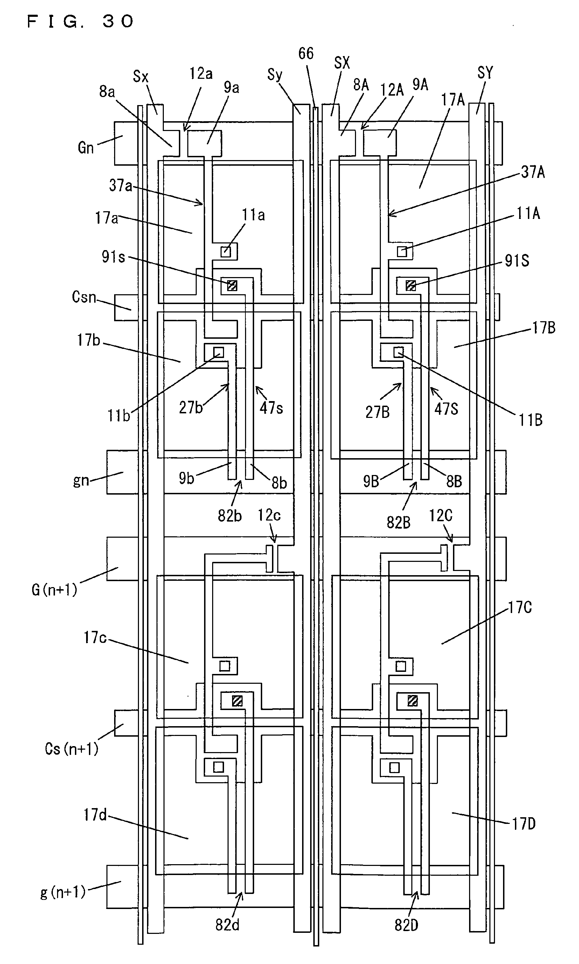

   Fig. 30 is a plan view showing still another configuration of the liquid crystal panel of Fig. 1.
Fig. 31

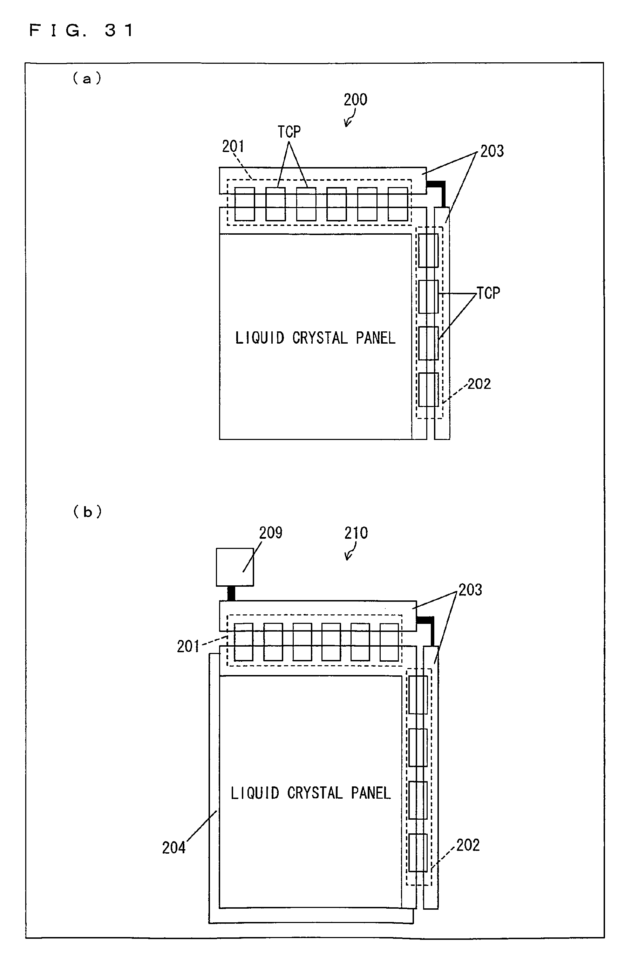

   Fig. 31 is a set of schematic views (a) and (b), (a) showing a configuration of a liquid crystal display unit according to the present invention, (b) showing a configuration of a liquid crystal display device according to the present invention.
Fig. 32

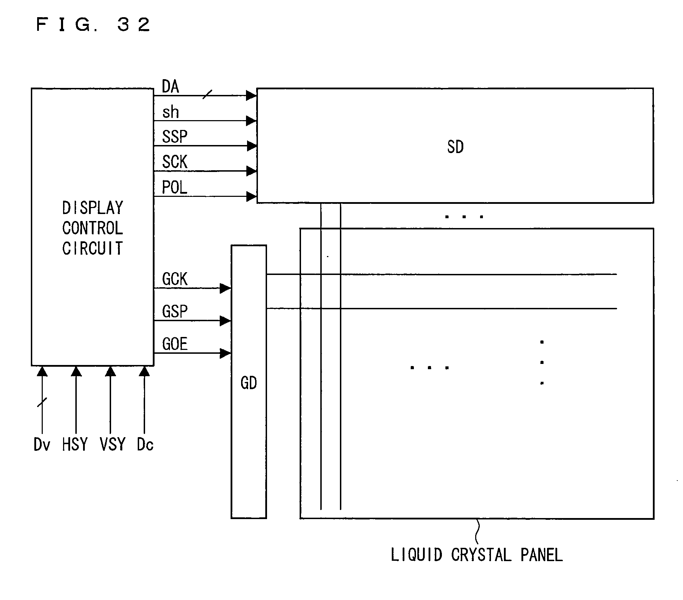

   Fig. 32 is a block diagram explaining the overall configuration of the liquid crystal display device according to the present invention.
Fig. 33

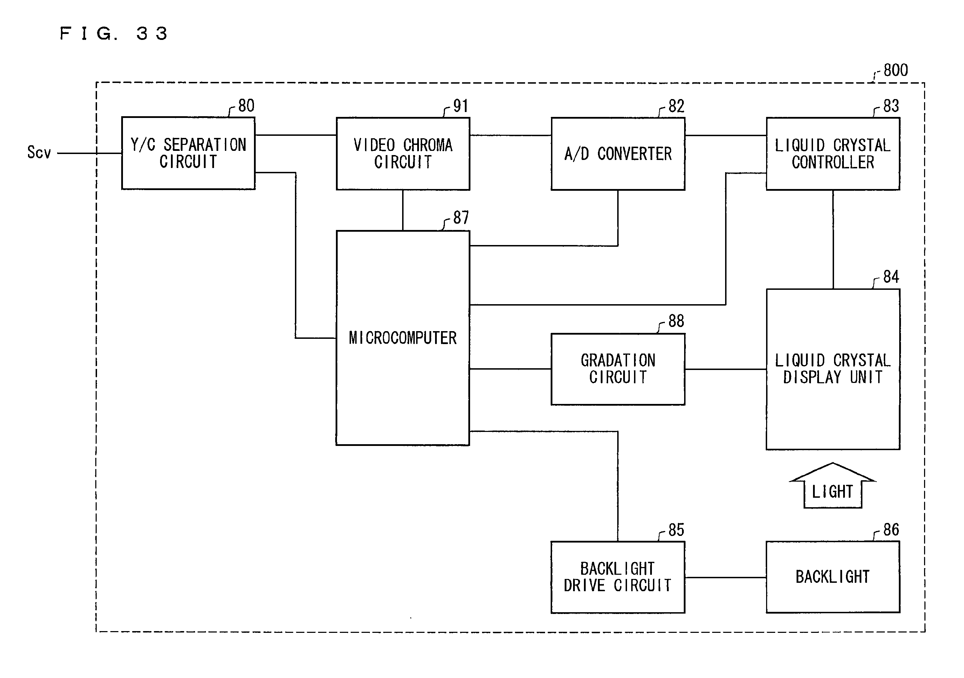

   Fig. 33 is a block diagram explaining functions of the liquid crystal display device according to the present invention.
Fig. 34

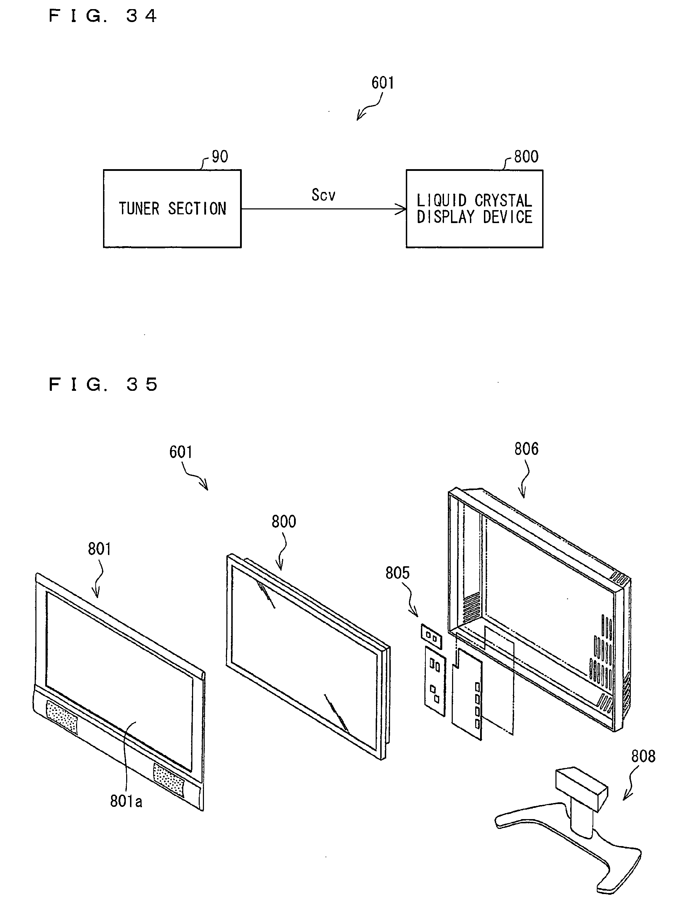

   Fig. 34 is a block diagram explaining functions of a television receiver according to the present invention.
Fig. 35
   Fig. 35 is an exploded perspective view showing a configuration of the television receiver according to the present invention.
Fig. 36

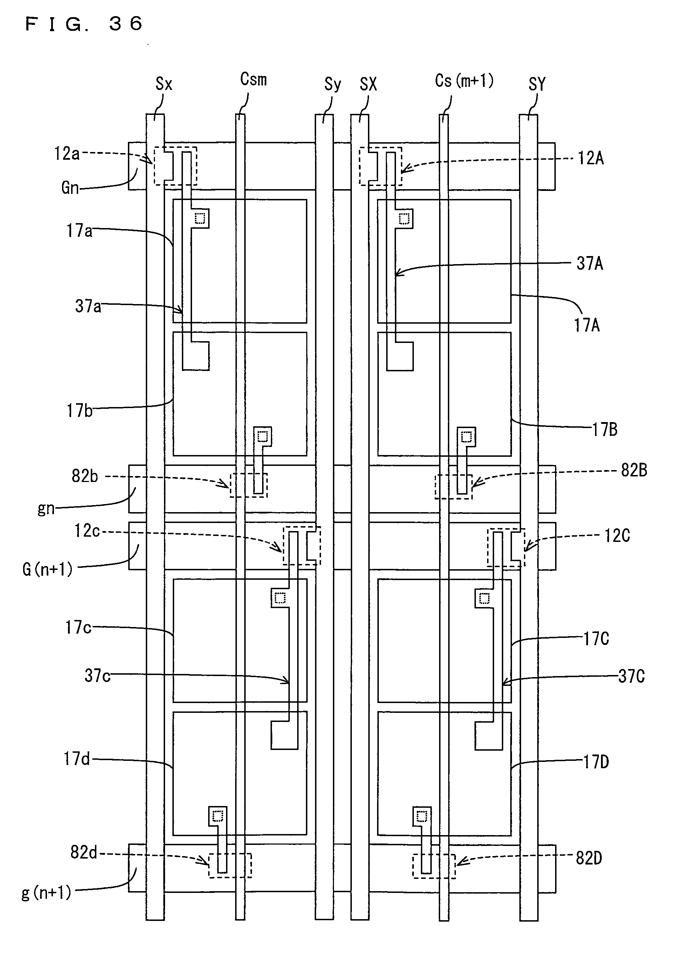

   Fig. 36 is a plan view showing a modification of the liquid crystal panel of Fig. 1.
Fig. 37

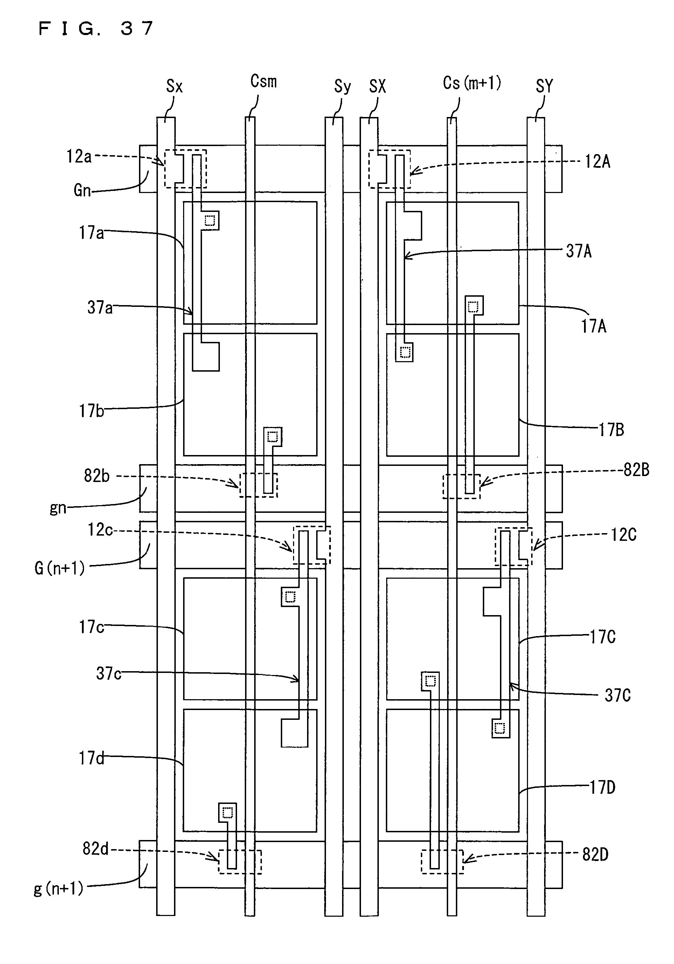

   Fig. 37 is a plan view showing a modification of the liquid crystal panel of Fig. 10.
Fig. 38

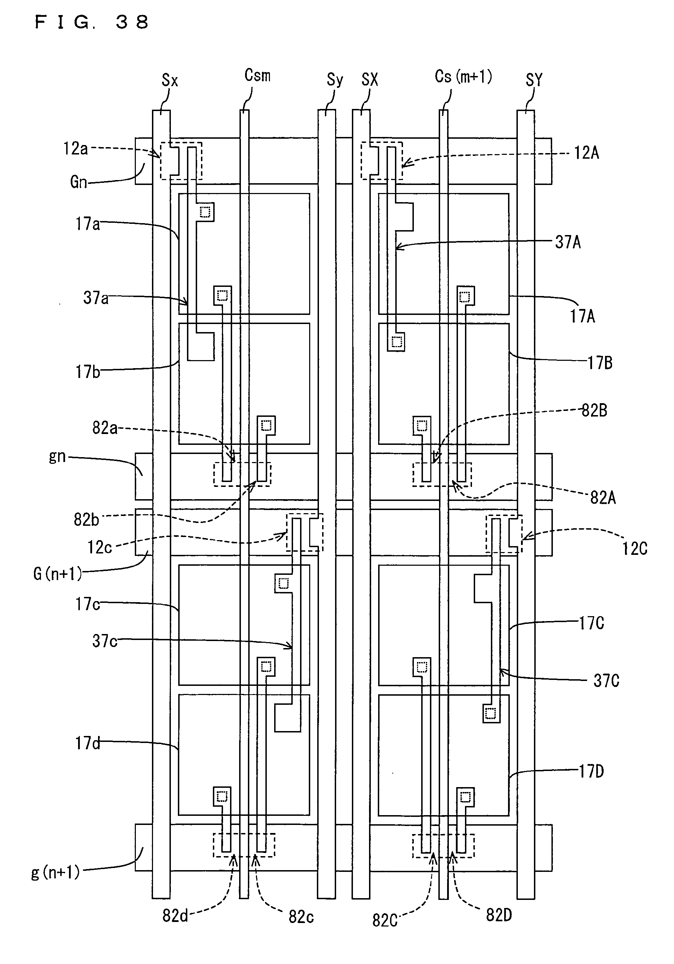

   Fig. 38 is a plan view showing a modification of the liquid crystal panel of Fig. 18.
Fig. 39

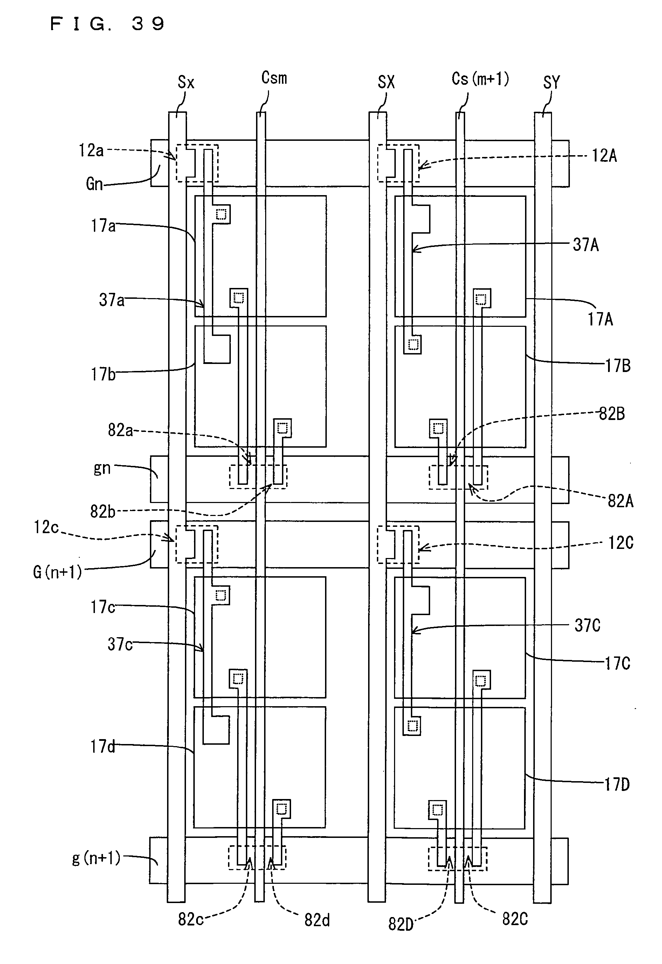

   Fig. 39 is a plan view showing a modification of the liquid crystal panel of Fig. 24.
Fig. 40
   Fig. 40 is a schematic view showing a configuration of a conventional liquid crystal panel.

### Description of Embodiments

Examples of embodiments according to the present invention are described below with reference to Figs. 1 through 39. For convenience of explanation, the following description assumes that a direction in which data signal lines extend is referred to as "column-wise direction" and a direction in which scanning signal lines extend is referred to as "row-wise direction". However, while a liquid crystal display device according to the present invention is being used (watched), the scanning signal lines may of course appear to be extending in a transverse direction or extending in a longitudinal direction. Further, a single pixel region of an active-matrix substrate corresponds to a single pixel of a liquid crystal panel or of a liquid crystal display device.

### (Embodiment 1)

Fig. 1 is an equivalent circuit diagram showing part of a liquid crystal panel 5a according to the present embodiment. The liquid crystal panel 5a includes rows and columns of pixels each containing two pixel electrodes connected to each other via a capacitor, with each data signal line extending in a column-wise direction, each of the columns of pixels being provided with two data signal lines corresponding thereto, each of the rows of pixels being provided with a single scanning line and a single sub-signal line both corresponding thereto, one of the two pixel electrodes of each of the pixels belonging to the columns of pixels and the rows of pixels being connected to either of the two data signal lines via a transistor connected to the scanning signal line, the other pixel electrode being connected to a retention capacitor wire via a transistor connected to the sub-signal line. Moreover, a data signal line connected via a transistor to a pixel electrode contained in one of two pixels adjacent to each other in the column-wise direction and a data signal line connected via a transistor to a pixel electrode contained in the other pixel are different from each other. Furthermore, each of the pixels has its two pixel electrodes arranged in the column-wise direction, and two pixel electrodes connected to data signal lines via transistors, respectively, and adjacent to each other in a row-wise direction are connected to an identical scanning signal line via the transistors. It should be noted that the single scanning signal line and the single sub-signal line both corresponding to each of the rows of pixels are either disposed on both sides of that row of pixels, respectively, or disposed in such a way as to overlap both end portions of that row of pixels, respectively.

For example, pixels 101 and 105 are arranged in the row-wise direction, and the pixels 101 and pixels 102 to 104 are arranged in the column-wise direction. A column of pixels including the pixels 101 to 104 is provided with two data signal lines Sx and Sy corresponding thereto, and a row of pixels including the pixels 101 and 105 is provided with a single scanning signal line Gn and a single sub-signal line gn both corresponding thereto. It should be noted that the column of pixels including the pixels 101 to 104 and a column of pixels including the pixel 105 and pixels 106 to 108 are adjacent to each other, that the column of pixels including the pixels 105 to 108 is provided with two data signal lines SX and SY corresponding thereto, and that the data signal lines Sx, Sy, SX, and SY are arranged in this order. Further, four rows of pixels, namely the row of pixels including the pixels 101 and 105, a row of pixels including the pixels 102 and 106, a row of pixels including the pixels 103 and 107, and a row of pixels including the pixels 104 and 108, are arranged in the order named in a scanning direction (column-wise direction). The row of pixels including the pixels 102 and 106 is provided with a signal scanning signal line G(n+1) and a single sub-signal line g(n+1) both corresponding thereto. The row of pixels including the pixels 103 and 107 is provided with a signal scanning signal line G(n+2) and a single sub-signal line g(n+2) both corresponding thereto. The row of pixels including the pixels 104 and 108 is provided with a signal scanning signal line G(n+3) and a single sub-signal line g(n+3) both corresponding thereto.

It should be noted here that the pixel 101 has two pixel electrodes 17a and 17b connected to each other via a capacitor Cab and arranged in this order in the scanning direction (column-wise direction), with the pixel electrode 17a connected to the drain electrode of a transistor 12a connected to the scanning signal line Gn and with the pixel electrode 17b connected to the drain electrode of a transistor 82b connected to the sub-signal line gn, and the transistor 12a has its source electrode connected to the data signal line Sx and the transistor 82b has its source electrode connected to a retention capacitor wire Csn. Formed between the pixel electrode 17a and a common electrode (counter electrode) com is a liquid crystal capacitor C1a. Formed between the pixel electrode 17b and the common electrode (counter electrode) com is a liquid crystal capacitor Clb.

Further, the pixel 102, which is adjacent to the pixel 101 in the column-wise direction, has two pixel electrodes 17c and 17d connected to each other via a capacitor Ccd and arranged in this order in the scanning direction (column-wise direction), with the pixel electrode 17c connected to the drain electrode of a transistor 12c connected to the scanning signal line G(n+1) and with the pixel electrode 17d connected to the drain electrode of a transistor 82d connected to the sub-signal line g(n+1), and the transistor 12c has its source electrode connected to the data signal line Sy and the transistor 82d has its source electrode connected to a retention capacitor wire Cs(n+1). Formed between the pixel electrode 17c and the common electrode (counter electrode) com is a liquid crystal capacitor Clc. Formed between the pixel electrode 17d and the common electrode (counter electrode) com is a liquid crystal capacitor Cld.

Further, the pixel 103 has two pixel electrodes 17e and 17f connected to each other via a capacitor Cef and arranged in this order in the scanning direction (column-wise direction), with the pixel electrode 17e connected to the drain electrode of a transistor 12e connected to the scanning signal line G(n+2) and with the pixel electrode 17f connected to the drain electrode of a transistor 82f connected to the sub-signal line g(n+2), and the transistor 12e has its source electrode connected to the data signal line Sx and the transistor 82f has its source electrode connected to a retention capacitor wire Cs(n+2).

Further, the pixel 104 has two pixel electrodes 17g and 17h connected to each other via a capacitor Cgh and arranged in this order in the scanning direction (column-wise direction), with the pixel electrode 17g connected to the drain electrode of a transistor 12g connected to the scanning signal line G(n+3) and with the pixel electrode 17h connected to the drain electrode of a transistor 82h connected to the sub-signal line g(n+3), and the transistor 12g has its source electrode connected to the data signal line Sy and the transistor 82h has its source electrode connected to a retention capacitor wire Cs(n+3).

Further, the pixel 105, which is adjacent to the pixel 101 in the row-wise direction, has two pixel electrodes 17A and 17B connected to each other via a capacitor CAB and arranged in this order in the scanning direction (column-wise direction), with the pixel electrode 17A connected to the drain electrode of a transistor 12A connected to the scanning signal line Gn and with the pixel electrode 17B connected to the drain electrode of a transistor 82B connected to the sub-signal line gn, and the transistor 12A has its source electrode connected to the data signal line SX and the transistor 82B has its source electrode connected to the retention capacitor wire Csn. Formed between the pixel electrode 17A and the common electrode (counter electrode) com is a liquid crystal capacitor C1A. Formed between the pixel electrode 17B and the common electrode (counter electrode) com is a liquid crystal capacitor C1B.

Further, the pixel 106, which is adjacent to the pixel 102 in the row-wise direction, has two pixel electrodes 17C and 17D connected to each other via a capacitor CCD and arranged in this order in the scanning direction (column-wise direction), with the pixel electrode 17C connected to the drain electrode of a transistor 12C connected to the scanning signal line G(n+1) and with the pixel electrode 17D connected to the drain electrode of a transistor 82D connected to the sub-signal line g(n+1), and the transistor 12C has its source electrode connected to the data signal line SY and the transistor 82D has its source electrode connected to the retention capacitor wire Cs(n+1). Formed between the pixel electrode 17C and the common electrode (counter electrode) com is a liquid crystal capacitor C1C. Formed between the pixel electrode 17D and the common electrode (counter electrode) com is a liquid crystal capacitor C1D.

Further, the pixel 107 has two pixel electrodes 17E and 17F connected to each other via a capacitor CEF and arranged in this order in the scanning direction (column-wise direction), with the pixel electrode 17E connected to the drain electrode of a transistor 12E connected to the scanning signal line G(n+2) and with the pixel electrode 17F connected to the drain electrode of a transistor 82F connected to the sub-signal line g(n+2), and the transistor 12E has its source electrode connected to the data signal line SX and the transistor 82F has its source electrode connected to the retention capacitor wire Cs(n+2).

Further, the pixel 108 has two pixel electrodes 17G and 17H connected to each other via a capacitor CGH and arranged in this order in the scanning direction (column-wise direction), with the pixel electrode 17G connected to the drain electrode of a transistor 12G connected to the scanning signal line G(n+3) and with the pixel electrode 17H connected to the drain electrode of a transistor 82H connected to the sub-signal line g(n+3), and the transistor 12G has its source electrode connected to the data signal line SY and the transistor 82H has its source electrode connected to the retention capacitor wire Cs(n+3).

Fig. 2 is a schematic view showing a method for driving part of the liquid crystal panel 5a (eight rows of pixels including the four rows of pixels of Fig. 1) for every single horizontal scanning period. Fig. 3 is a timing chart explaining the driving method (for two frames). The reference signs "Sx", "Sy", "SX", and "SY" of Fig. 3 represent data signals that are supplied to the data signal lines Sx, Sy, SX, and SY of Fig. 2, respectively. The reference signs "Gn" to "G(n+5)" of Fig. 3 represent scanning signals (active High) that are supplied to the scanning signal lines Gn to G(n+5) of Fig. 2, respectively. The reference signs "g(n+2)" to "g(n+7)" of Fig. 3 represent refresh signals that are supplied to the sub-signal lines g(n+2) to g(n+7) of Fig. 2, respectively. The reference signs "17e" to "17h", "17E", and "17F" of Fig. 3 represent potentials of the pixel electrodes 17e to 17h, 17E, and 17F of Fig. 1, respectively.

According to the driving method of Figs. 2 and 3, two scanning signal lines corresponding to two rows of pixels upstream of the scanning direction among four consecutive rows of pixels and two sub-signal lines corresponding to two rows of pixels downstream of the scanning direction among the four consecutive rows of pixels are simultaneously selected. Then, a data signal line (e.g., Sx) connected via a transistor to a pixel electrode contained in one of two pixels adjacent to each other in the column-wise direction and a data signal line (e.g., Sy) connected via a transistor to a pixel electrode contained in the other pixel are supplied with data signals opposite in polarity to each other. Furthermore, two adjacent data signal lines (e.g., Sy and SX) corresponding to different columns of pixels are supplied with data signals equal in polarity to each other. It should be noted that the polarity of a data signal that is supplied to a data signal line is reversed every single vertical scanning period (one frame period).

For example, let it be assumed that there are three consecutive horizontal scanning periods H 1 to H3. During H1, the two scanning signal lines Gn and G(n+1) and the two sub-signal lines g(n+2) and g(n+3) are selected (made active). With this, as shown in Figs. 1 through 3, a positive data signal is written to the pixel electrode 17a connected to the scanning signal Gn and the data signal line Sx via the transistor, and a negative data signal is written to the pixel electrode 17A connected to the scanning signal Gn and the data signal line SX via the transistor. A negative data signal is written to the pixel electrode 17c connected to the scanning signal G(n+1) and the data signal line Sy via the transistor, and a positive data signal is written to the pixel electrode 17C connected to the scanning signal G(n+1) and the data signal line SY via the transistor. The pixel electrodes 17f and 17F connected to the sub-signal line g(n+2) and the retention capacitor wire Cs(n+2) via the transistors and the pixel electrodes 17h and 17H connected to the sub-signal line g(n+3) and the retention capacitor wire Cs(n+3) via the transistors are refreshed to the potentials of the respective retention capacitor wires. It should be noted that since the pixel electrode 17b is connected to the pixel electrode 17a via the coupling capacitor Cab, the pixel electrode 17b is not higher in voltage (potential difference based on the amplitude center of the data signal) than the pixel electrode 17a. That is, the luminance of a subpixel corresponding to the pixel electrode 17b is not higher than the luminance of a subpixel corresponding to the pixel electrode 17a. Similarly, the pixel electrode 17B is not higher in voltage than the pixel electrode 17A. The pixel electrode 17d is not higher in voltage than the pixel electrode 17c. The pixel electrode 17D is not higher in voltage than the pixel electrode 17C.

During H2, the two scanning signal lines G(n+2) and G(n+3) and the two sub-signal lines g(n+4) and g(n+5) are selected (made active). With this, as shown in Figs. 1 through 3, a positive data signal is written to the pixel electrode 17e connected to the scanning signal G(n+2) and the data signal line Sx via the transistor, and a negative data signal is written to the pixel electrode 17E connected to the scanning signal G(n+2) and the data signal line SX via the transistor. A negative data signal is written to the pixel electrode 17g connected to the scanning signal G(n+3) and the data signal line Sy via the transistor, and a positive data signal is written to the pixel electrode 17G connected to the scanning signal G(n+3) and the data signal line SY via the transistor. The pixel electrodes connected to the sub-signal line g(n+4) and the retention capacitor wire Cs(n+4) via transistors and the pixel electrodes connected to the sub-signal line g(n+5) and the retention capacitor wire Cs(n+5) via transistors are refreshed to the potentials of the respective retention capacitor wires. It should be noted that since the pixel electrode 17f is connected to the pixel electrode 17e via the coupling capacitor Cef, the pixel electrode 17f is not higher in voltage (potential difference based on the amplitude center of the data signal) than the pixel electrode 17e. That is, the luminance of a subpixel corresponding to the pixel electrode 17f is not higher than the luminance of a subpixel corresponding to the pixel electrode 17e. Similarly, the pixel electrode 17F is not higher in voltage than the pixel electrode 17E. The pixel electrode 17h is not higher in voltage than the pixel electrode 17g. The pixel electrode 17H is not higher in voltage than the pixel electrode 17G.

During H3, the two scanning signal lines G(n+4) and G(n+5) and the two sub-signal lines g(n+6) and g(n+7) are selected (made active). With this, as shown in Figs. 2 and 3, a positive data signal is written to the pixel electrode connected to the scanning signal G(n+4) and the data signal line Sx via a transistor, and a negative data signal is written to the pixel electrode connected to the scanning signal G(n+4) and the data signal line SX via a transistor. A negative data signal is written to the pixel electrode connected to the scanning signal G(n+5) and the data signal line Sy via a transistor, and a positive data signal is written to the pixel electrode connected to the scanning signal G(n+5) and the data signal line SY via a transistor. The pixel electrodes connected to the sub-signal line g(n+6) and the retention capacitor wire Cs(n+6) via transistors and the pixel electrodes connected to the sub-signal line g(n+7) and the retention capacitor wire Cs(n+7) via transistors are refreshed to the potentials of the respective retention capacitor wires.

For the reasons stated above, as shown in Fig. 2, in the case of a solid halftone display, bright and dark subpixels are alternately arranged in the column of pixels corresponding to the data signal lines Sx and Sy such that a bright subpixel, a dark subpixel, a bright subpixel, a dark subpixel, and so on are arranged in this order, and dark and bright subpixels are alternately arranged in the column of pixels corresponding to the data signal lines SX and SY such that a dark subpixel, a bright subpixel, a dark subpixel, a bright subpixel, and so on are arranged in this order.

A liquid crystal display device including the liquid crystal panel 5a is of a capacitively-coupled pixel-division type, and allows data signals to be written to two rows of pixels at the same time, thus making it possible to carry out high-speed driving (e.g., double-speed driving) at a rewrite frequency of 60 Hz or higher while maintaining charging time for the pixels with satisfactory viewing angle characteristics.

Further, since each pixel contains two pixel electrodes one of which is connected to a data signal line via a transistor and the other one of which is connected to a retention capacitor wire via a transistor (that is, there is no pixel electrode in the pixel that is electrically floating), such problems as pixel image sticking that the capacitively-coupled pixel-division type has suffered from can be suppressed.

Moreover, since one transistor per pixel is connected to each scanning signal line, the load on each scanning signal line is reduced as compared with such a configuration as that of Fig. 40, the configuration according to the present embodiment is suitable for a large-sized high-definition liquid crystal display device and a high-speed-driven (e.g., double-speed-driven or quadruple-speed-driven) liquid crystal display device.

Furthermore, since, in each frame, one (which corresponds to a pixel electrode connected to a retention capacitor wire via a transistor, i.e., to a dark subpixel) of the two pixel electrodes contained in each pixel is refreshed to the potential of the retention capacitor wire before a data signal is written to the other pixel electrode (which corresponds to a pixel electrode connected to a data signal line via a transistor, i.e., to a bright subpixel), the luminance of the bright and dark subpixels can be properly controlled.

Further, since the polarity of a data signal line that is supplied to an identical data signal line does not change during a single vertical scanning period, the amount of electricity that is consumed by the source driver can be reduced as compared with a case where the polarity of a data signal is reversed every single horizontal period. In addition, since a distribution of polarity among data signals on the screen takes the form of dot reversal, the screen can be prevented from flickering.

Fig. 4 is a plan view showing an example of a configuration of part of the liquid crystal panel 5a shown in Fig. 1. In the liquid crystal panel 5a, as shown in Fig. 4, the scanning signal lines Gn, the sub-signal line gn, the scanning signal line G(n+1), and the sub-signal line g(n+1), which extend in the row-wise direction, are disposed in this order, and the data signal lines Sx, Sy, SX, and SY, which extend in the column-wise direction, are arranged in this order. When seen in a plan view, the pixel electrodes 17a and 17b are arranged in this order in the scanning direction (column-wise direction) in a region defined by the scanning signal line Gn, the sub-signal line gn, and the data signal lines Sx and Sy, and the pixel electrodes 17A and 17B are arranged in this order in the scanning direction (column-wise direction) in a region defined by the scanning signal line Gn, the sub-signal line gn, and the data signal lines SX and SY; and the pixel electrodes 17c and 17d are arranged in this order in the scanning direction (column-wise direction) in a region defined by the scanning signal line G(n+1), the sub-signal line g(n+1), and the data signal lines Sx and Sy, and the pixel electrodes 17C and 17D are arranged in this order in the scanning direction (column-wise direction) in a region defined by the scanning signal line G(n+1), the sub-signal line g(n+1), and the data signal lines SX and SY. Further, the retention capacitor wire Csn is disposed between the scanning signal line Gn and the sub-signal line gn, and the retention capacitor wire Cs(n+1) is disposed between the scanning signal line G(n+1) and the sub-signal line g(n+1).

It should be noted that the scanning signal line Gn functions as the gate electrodes of the transistors 12a and 12A, the sub-signal line gn as the gate electrodes of the transistors 82b and 82B, the scanning signal line G(n+1) as the gate electrodes of the transistors 12c and 12C, the sub-signal line g(n+1) as the gate electrodes of the transistors 82d and 82D. Further, the transistor 12a has its source electrode connected to the data signal line Sx, and the transistor 12c has its source signal connected to the data signal line Sy; and the transistor 12A has its source electrode connected to the data signal line SX, and the transistor 12C has its source electrode connected to the data signal line SY.

Further, the transistor 12a has its drain electrode 9a connected to an extraction electrode 37a, and the extraction electrode 37a and the pixel electrode 17a are connected to each other via a contact hole 11a. The extraction electrode 37a has a part overlapping the retention capacitor wire Csn via a gate insulating film and a part overlapping the pixel electrode 17b via an interlayer insulating film. It should be noted that a boundary between the drain electrode 9a and the extraction electrode 37a is on an edge of the scanning signal line Gn. Meanwhile, the transistor 82b has its drain electrode 9b connected to an extraction electrode 27b, and the extraction electrode 27b and the pixel electrode 17b are connected to each other via a contact hole 11b. The extraction electrode 27b has a part overlapping the retention capacitor wire Csn via the gate insulating film. It should be noted that a boundary between the drain electrode 9b and the extraction electrode 27b is on an edge of the sub-signal line gn. Furthermore, the transistor 82b has its source electrode 8b connected to an extraction electrode 47s, and the extraction electrode 47s and the retention capacitor wire Csn are connected to each other via a contact hole 91s. The extraction electrode 47s has a part overlapping the pixel electrode 17a via the interlayer insulating film and a part overlapping the pixel electrode 17b via the interlayer insulating film. It should be noted that a boundary between the source electrode 8b and the extraction electrode 47s is on an edge of the sub-signal line gn.

It should be noted here that the coupling capacitor Cab (see Fig. 1) is formed in the overlap between the extraction electrode 37a and the pixel electrode 17b, that a retention capacitor csa (see Fig. 1) is formed mostly in the overlap between the extraction electrode 37a and the retention capacitor wire Csn and in the overlap between the extraction electrode 47s and the pixel electrode 17a, and that a retention capacitor csb (see Fig. 1) is formed mostly in the overlap between the extraction electrode 27b and the retention capacitor wire Csn and in the overlap between the extraction electrode 47s and the pixel electrode 17b.

Further, the transistor 12A has its drain electrode 9A connected to an extraction electrode 37A, and the extraction electrode 37A and the pixel electrode 17A are connected to each other via a contact hole 11A. The extraction electrode 37A has a part overlapping the retention capacitor wire Csn via the gate insulating film and a part overlapping the pixel electrode 17B via the interlayer insulating film. Meanwhile, the transistor 82B has its drain electrode 9B connected to an extraction electrode 27B, and the extraction electrode 27B and the pixel electrode 17B are connected to each other via a contact hole 11B. The extraction electrode 27B has a part overlapping the retention capacitor wire Csn via the gate insulating film. Furthermore, the transistor 82B has its source electrode 8B connected to an extraction electrode 47S, and the extraction electrode 47S and the retention capacitor wire Csn are connected to each other via a contact hole 91S. The extraction electrode 47S has a part overlapping the pixel electrode 17A via the interlayer insulating film and a part overlapping the pixel electrode 17B via the interlayer insulating film.

It should be noted here that the coupling capacitor CAB (see Fig. 1) is formed in the overlap between the extraction electrode 37A and the pixel electrode 17B, that a retention capacitor csA (see Fig. 1) is formed mostly in the overlap between the extraction electrode 37A and the retention capacitor wire Csn and in the overlap between the extraction electrode 47S and the pixel electrode 17A, and that a retention capacitor csB (see Fig. 1) is formed mostly in the overlap between the extraction electrode 27B and the retention capacitor wire Csn and in the overlap between the extraction electrode 47S and the pixel electrode 17B.

Fig. 5 is a cross-sectional view taken in the arrow of Fig. 4. As shown in Fig. 5, the liquid crystal panel 5a includes: an active-matrix substrate 3; a color filter substrate 30, which faces the active-matrix substrate 3; and a liquid crystal layer 40 sandwiched between the two substrates (3 and 30).

Formed on a glass substrate 31 of the active-matrix substrate 3 are the scanning signal line Gn, the sub-signal line gn, and the retention capacitor wire Csn, with a gate insulting film 22 formed in such a way as to cover the glass substrate 31, the scanning signal line Gn, the sub-signal line gn, and the retention capacitor wire Csn. Formed on the gate insulating film 22 are a semiconductor layer 24 (an i layer and an n+ layer), a source electrode 8a in contact with the n+ layer, the drain electrodes 9a and 9b, and the extraction electrode 37a, with an interlayer insulating film 51 formed in such a way as to cover the gate insulating film 22, the semiconductor layer 24, the source electrode 8a, the drain electrodes 9a and 9b, and the extraction electrode 37a. Formed on the interlayer insulating film 51 are the pixel electrodes 17a and 17b, with an alignment film (not illustrated) further formed in such a way as to cover the pixel electrodes 17a and 17b. It should be noted here that the contact hole 11a is bored through the interlayer insulating film 51, whereby the pixel electrode 17a and the extraction electrode 37a are connected to each other. Further, the extraction electrode 37a has its distal end overlapping the pixel electrode 17b via the interlayer insulating film 51, whereby part of the coupling capacitor Cab (see Fig. 1) is formed. Further, the extraction electrode 37a has its distal end overlapping the retention capacitor wire Csn via the gate insulating film 22, whereby part of the retention capacitor csa (see Fig. 1) is formed.

Meanwhile, the color filter substrate 30 includes: a glass substrate 32; a black matrix 13 formed on the glass substrate 32; a colored layer 14 formed on the glass substrate 31; a common electrode (com) 28 formed on the black matrix 13 and the colored layer 14; and an alignment film (not illustrated) further formed in such a way as to cover the common electrode 28.

The following describes a method for fabricating a liquid crystal panel according to the present embodiment. The method for fabricating a liquid crystal panel includes an active-matrix substrate fabricating step, a color filter substrate fabricating step; and an assembling step of joining the substrate on top of each other and filling the space therebetween with liquid crystals.

First, a metal film made of titanium, chromium, aluminum, molybdenum, tantalum, tungsten, copper, or the like, an alloy film composed of two or more of these metals, or a laminated film (1000 Å to 3000 Å in thickness) composed of two or more of these films is formed by sputtering on a substrate made of glass, plastic, or the like. After that, scanning signal lines, sub-signal lines (gate electrodes of transistors), and retention capacitor wires are formed by carrying out patterning by a photoengraving process (hereinafter referred to as "PEP", which include an etching step) and removing the photoresist.

Next, an inorganic insulating film (3000 Å to 5000 Å in thickness) made of silicon nitride, silicon nitride, or the like is formed by CVD (chemical vapor deposition) on the whole substrate on which the scanning signal lines have been formed, whereby a gate insulating film is formed.

Then, an intrinsic amorphous silicon film (1000 Å to 3000 Å in thickness) and an n+ amorphous silicon film (400 Å to 700 Å in thickness) doped with phosphor are formed in series by CVD on the gate insulating film (whole substrate). After that, a silicon laminate composed of the intrinsic amorphous silicon film and the n+ amorphous silicon film is formed in the form of islands on the gate electrodes by carrying out PEP patterning and removing the photoresist.

Then, the gate insulating film is patterned by the photoengraving process, whereby contact holes are formed.

Then, a metal film made of titanium, chromium, aluminum, molybdenum, tantalum, tungsten, copper, or the like, an alloy film composed of two or more of these metals, or a laminated film (1000 Å to 3000 Å in thickness) composed of two or more of these films is formed by sputtering on the whole substrate on which the silicon laminate has been formed. After that, by carrying out PEP patterning, data signal lines, source and drain electrodes of the transistors, and extraction electrodes are formed (formation of a metal layer). At this point in time, the resist is removed as needed.

Furthermore, channels for the transistors are formed by etching away the n+ amorphous silicon layer, which constitutes the silicon laminate, with use as a mask of either the photoresist applied during the formation of the metal layer or the source and drain electrodes and removing the photoresist. At this point in time, the semiconductor layer may be formed by amorphous silicon films as mentioned above, but polysilicon films may be formed. Alternatively, crystallinity may be improved by performing laser annealing on the amorphous silicon films and the polysilicon films. This leads to an increase in moving speed of electrons within the semiconductor layer, thus achieving improvement in the characteristics of the transistors (TFTs).

Next, an interlayer insulating film is formed on the whole substrate on which the data signal lines and the like have been formed. Specifically, an inorganic insulting film (passivation film) approximately 300 Å in thickness made of SiNx is formed by CVD with use of a mixture of SiH₄ gas and NH₃ gas in such a way as to cover the whole substrate surface.

After that, the interlayer insulating film are etched away by PEP, whereby contact holes are formed.

Then, a transparent conductive film (1000 Å to 2000 Å in thickness) made of ITO (indium tin oxide), IZO (indium zinc oxide), zinc oxide, tin oxide, or the like is formed by sputtering on the interlayer insulating film, formed on the whole substrate, in which the contact holes have been made. After that, pixel electrodes are formed by carrying out PEP patterning and removing the resist.

Finally, an alignment film is formed by printing polyimide resin 500 Å to 1000 Å in thickness on the whole substrate on which the pixel electrodes have been formed, calcining the polyimide resin, and then carrying out a rubbing process unidirectionally with rotary cloth. This is how an active-matrix substrate is fabricated.

The following describes the color filter substrate fabricating step.

First, a black matrix is formed by forming a chromium thin film or a film of resin containing a black pigment on a substrate (whole substrate) made of glass, plastic, or the like and then patterning the film by PEP. Next, a red, green, and blue color filter layer (approximately 2 µm in thickness) is pattern-formed in spaces in the black matrix by a pigment dispersion method or the like.

Then, a common electrode (com) is formed by forming a transparent conductive film (approximately 1000 Å in thickness) made of ITO, IZO, zinc oxide, tin oxide, or the like on the whole substrate on which the color filter has been formed.

Finally, an alignment film is formed by printing polyimide resin 500 Å to 1000 Å in thickness on the whole substrate on which the common electrode have been formed, calcining the polyimide resin, and then carrying out a rubbing process unidirectionally with rotary cloth. This is how a color filter substrate can be fabricated.

The following describes the assembling step.

First, a sealing material made of a thermosetting epoxy resin or the like is applied by screen printing onto either the active-matrix substrate or the color filter substrate into a frame pattern having an absent part that serves as a liquid crystal inlet, and spherical spacers, made of plastic or silica, which have a diameter corresponding to the thickness of the liquid crystal layer are dispersed onto the other substrate. It should be noted that instead of dispersing the spacers, it is possible to form spacers by PEP on the black matrix of the color filter substrate or on the metal wires of the active matrix substrate.

Next, the active-matrix substrate and the color filter substrate are joined on top of each other, and the sealing material is cured.

Finally, the liquid crystal layer is formed by injecting a liquid crystal material through an evacuation method into the space surrounded by the active-matrix substrate, the color filter substrate, and the sealing material, applying a UV-curing resin onto the liquid crystal inlet, and then irradiating the UV-curing resin with UV. This is how a liquid crystal panel is fabricated.

It should be noted that in an MVA (multi-domain vertical alignment) liquid crystal panel, for example, each pixel electrode of the active-matrix substrate is provided with an alignment controlling slit and the color filter substrate is provided with alignment controlling ribs (linear projections). It should be noted that instead of the ribs, it is possible to provide the common electrode of the color filter substrate with alignment controlling slits. Further, it is possible to use optical alignment liquid crystals whose alignment is determined by irradiation with ultraviolet rays or the like. In this case, a larger viewing angle can be achieved without providing structures such as ribs and slits, so that there is a dramatic improvement in aperture ratio.

It should be noted that the interlayer insulating film (channel protecting film) of the active-matrix substrate may be constituted by an inorganic insulating film 25 and an organic insulating film 26 as shown in Fig. 6. This brings about an effect of reducing various parasitic capacitances and an effect of preventing the wires from being short-circuited with each other. It should be noted that it is preferable that the organic insulating film 26 be either hollowed out as shown in Fig. 6 or formed thinner than the surrounding area in the overlap between the extraction electrode 37a and the pixel electrode 17b. This makes it possible to ensure the capacitance of the coupling capacitor Cab (see Fig. 1). In a case like this where a thick interlayer insulating film is formed, the aperture ratio can be increased by causing the edge region of each pixel electrode to overlap the data signal line and the scanning signal line as shown in Fig. 29. Furthermore, in the configuration of Fig. 29, it is possible to provide, in the space (in the same layer as the data signal lines) or on the space (in the same layer as the pixel electrodes) between two adjacent data signal lines corresponding to each separate column of pixels, an interposed wire to which a different signal from a data signal is supplied. For example, as shown in Fig. 30, an interposed wire 66 is provided between the data signal lines Sy and SX. This makes it possible, for example, to reduce a crosstalk between the data signal line SX and the pixel electrode 17a and a crosstalk between the data signal line Sy and the pixel electrode 17A. Furthermore, although, in the liquid crystal panel 5a of Figs. 1 and 4, the retention capacitor wires are formed in the same layer as the scanning signal lines and the sub-signal lines and extend in the row-wise direction (in the transverse direction in the drawings), this does not imply any limitation. The retention capacitor wires, to which a constant potential is supplied, may be formed in the same layer (metal layer) as the data signal lines and extend in the column-wise direction (in the longitudinal direction in the drawings).

For example, as in Fig. 36, a retention capacitor wire Csm may be provided between the data signal lines Sx and Sy, and a retention capacitor wire Cs(m+1) may be provided between the data signal lines SX and SY. The retention capacitor wire Csm is disposed, for example, under a vertical line extending through the center of each of the pixel electrodes 17a, 17b, 17c, and 17d arranged in tandem (in the column-wise direction) (in the same layer as the data signal lines Sx and Sy), and the retention capacitor wire Cs(m+1) is disposed, for example, under a vertical line extending through the center of each of the pixel electrodes 17A, 17B, 17C, and 17D arranged in tandem (in the column-wise direction) (in the same layer as the data signal lines SX and SY).

It should be noted here that the extraction electrode 37a from the transistor 12a has a part connected the pixel electrode 17a through a contact hole and a part overlapping the pixel electrode 17b, that part of the sub-signal line gn functions as the gate electrode of the transistor 82b and part of the retention capacitor wire Csm functions as the source electrode of the transistor 82b, and that the transistor 82b has its drain electrode connected to the pixel electrode 17b via an extraction electrode and a contact hole. Moreover, a retention capacitor is formed between the retention capacitor wire Csm and each of the pixel electrodes 17a, 17b, 17c, and 17d.

The foregoing configuration makes it possible to shorten the length of each extraction electrode extracted from a transistor to be connected to a sub-signal line, thus achieving an increase in aperture ratio. Further, the foregoing configuration has a merit of eliminating the need to form such a contact hole as to pass through the gate insulating film.

Fig. 7 is a circuit diagram showing a configuration of a liquid crystal panel 5b according to the present embodiment. The liquid crystal panel 5b differs from the liquid crystal panel 5a (see Fig. 1) in that two pixel electrodes connected to data signal lines via separate transistors, respectively, and facing each other diagonally within the same row of pixels are connected to an identical scanning signal line via the separate transistors. Except for this point, the liquid crystal panel 5b is identical to the liquid crystal panel 5a.

For example, the pixel 101 has two pixel electrodes 17a and 17b connected to each other via a capacitor Cab and arranged in this order in the scanning direction (column-wise direction), with the pixel electrode 17a connected to the drain electrode of a transistor 12a connected to the scanning signal line Gn and with the pixel electrode 17b connected to the drain electrode of a transistor 82b connected to the sub-signal line gn, and the transistor 12a has its source electrode connected to the data signal line Sx and the transistor 82b has its source electrode connected to a retention capacitor wire Csn. Meanwhile, the pixel 105, which is adjacent to the pixel 101 in the row-wise direction, has two pixel electrodes 17A and 17B connected to each other via a capacitor CAB and arranged in this order in the scanning direction (column-wise direction), with the pixel electrode 17B connected to the drain electrode of a transistor 12A connected to the scanning signal line Gn and with the pixel electrode 17A connected to the drain electrode of a transistor 82B connected to the sub-signal line gn, and the transistor 12A has its source electrode connected to the data signal line SX and the transistor 82B has its source electrode connected to the retention capacitor wire Csn. That is, the pixel electrodes 17a and 17B, which face each other diagonally within the same row of pixels, are connected to the same scanning signal line Gn via the transistors 12a and 12A. Similarly, the pixel electrodes 17c and 17D, which face each other diagonally within the same row of pixels, are connected to the same scanning signal line G(n+1) via the transistors 12c and 12C. Similarly, the pixel electrodes 17e and 17F, which face each other diagonally within the same row of pixels, are connected to the same scanning signal line G(n+2) via the transistors 12e and 12E. Similarly, the pixel electrodes 17g and 17H, which face each other diagonally within the same row of pixels, are connected to the same scanning signal line G(n+3) via the transistors 12g and 12G.

Fig. 8 is a schematic view showing a method for driving part of the liquid crystal panel 5b (eight rows of pixels including the four rows of pixels of Fig. 7) for every single horizontal scanning period. Fig. 9 is a timing chart explaining the driving method (for two frames). It should be noted that the scanning signal lines, the sub-signal lines, and the data signal line are driven by the same method as that described in Figs. 2 and 3.

For example, during the horizontal scanning period H1, the two scanning signal lines Gn and G(n+1) and the two sub-signal lines g(n+2) and g(n+3) are selected (made active). With this, as shown in Figs. 7 through 9, a positive data signal is written to the pixel electrode 17a connected to the scanning signal Gn and the data signal line Sx via the transistor, and a negative data signal is written to the pixel electrode 17B connected to the scanning signal Gn and the data signal line SX via the transistor. A negative data signal is written to the pixel electrode 17c connected to the scanning signal G(n+1) and the data signal line Sy via the transistor, and a positive data signal is written to the pixel electrode 17D connected to the scanning signal G(n+1) and the data signal line SY via the transistor. The pixel electrodes 17f and 17E connected to the sub-signal line g(n+2) and the retention capacitor wire Cs(n+2) via the transistors and the pixel electrodes 17h and 17G connected to the sub-signal line g(n+3) and the retention capacitor wire Cs(n+3) via the transistors are refreshed to the potentials of the respective retention capacitor wires. It should be noted that since the pixel electrode 17b is connected to the pixel electrode 17a via the coupling capacitor Cab, the pixel electrode 17b is not higher in voltage (potential difference based on the amplitude center of the data signal) than the pixel electrode 17a. That is, the luminance of a subpixel corresponding to the pixel electrode 17b is not higher than the luminance of a subpixel corresponding to the pixel electrode 17a. Similarly, the pixel electrode 17A is not higher in voltage than the pixel electrode 17B. The pixel electrode 17d is not higher in voltage than the pixel electrode 17c. The pixel electrode 17C is not higher in voltage than the pixel electrode 17D.

Further, during the horizontal scanning period H2, the two scanning signal lines G(n+2) and G(n+3) and the two sub-signal lines g(n+4) and g(n+5) are selected (made active). With this, as shown in Figs. 7 through 9, a positive data signal is written to the pixel electrode 17e connected to the scanning signal G(n+2) and the data signal line Sx via the transistor, and a negative data signal is written to the pixel electrode 17F connected to the scanning signal G(n+2) and the data signal line SX via the transistor. A negative data signal is written to the pixel electrode 17g connected to the scanning signal G(n+3) and the data signal line Sy via the transistor, and a positive data signal is written to the pixel electrode 17H connected to the scanning signal G(n+3) and the data signal line SY via the transistor. The pixel electrodes connected to the sub-signal line g(n+4) and the retention capacitor wire Cs(n+4) via transistors and the pixel electrodes connected to the sub-signal line g(n+5) and the retention capacitor wire Cs(n+5) via transistors are refreshed to the potentials of the respective retention capacitor wires. It should be noted that since the pixel electrode 17f is connected to the pixel electrode 17e via the coupling capacitor Cef, the pixel electrode 17f is not higher in voltage (potential difference based on the amplitude center of the data signal) than the pixel electrode 17e. That is, the luminance of a subpixel corresponding to the pixel electrode 17f is not higher than the luminance of a subpixel corresponding to the pixel electrode 17e. Similarly, the pixel electrode 17E is not higher in voltage than the pixel electrode 17F. The pixel electrode 17h is not higher in voltage than the pixel electrode 17g. The pixel electrode 17G is not higher in voltage than the pixel electrode 17H.

For the reasons stated above, as shown in Fig. 8, in the case of a solid halftone display, bright and dark subpixels are alternately arranged in the column of pixels corresponding to the data signal lines Sx and Sy such that a bright subpixel, a dark subpixel, a bright subpixel, a dark subpixel, and so on are arranged in this order, and dark and bright subpixels are alternately arranged in the column of pixels corresponding to the data signal lines SX and SY such that a dark subpixel, a bright subpixel, a dark subpixel, a bright subpixel, and so on are arranged in this order.

Thus, in addition to the effects brought about by the liquid crystal panel 5a, the liquid crystal panel 5b brings about an effect of making linear unevenness less visible because, in the case of a solid halftone display, bright and dark subpixels are alternately arranged (disposed in a checkered pattern) both in the row-wise direction and the column-wise direction.

Fig. 10 is a plan view showing an example of a configuration of part of the liquid crystal panel 5b shown in Fig. 7. Although the liquid crystal panel 5b shown in Fig. 10 is identical to the liquid crystal panel 5a shown in Fig. 4 in terms of the disposition of the data signal lines, the scanning signal lines, the sub-signal lines, the retention capacitor wires, and the pixels (and the pixel electrodes contained in the pixels), two pixel electrodes connected to data signal lines via separate transistors, respectively, and facing each other diagonally within the same row of pixels are connected to an identical scanning signal line via the separate transistors.

For example, the transistor 12a has its drain electrode 9a connected to an extraction electrode 37a, and the extraction electrode 37a and the pixel electrode 17a are connected to each other via a contact hole 11a. The extraction electrode 37a has a part overlapping the retention capacitor wire Csn via a gate insulating film and a part overlapping the pixel electrode 17b via an interlayer insulating film. Further, the transistor 82b has its drain electrode 9b connected to an extraction electrode 27b, and the extraction electrode 27b and the pixel electrode 17b are connected to each other via a contact hole 11b. The extraction electrode 27b has a part overlapping the retention capacitor wire Csn via the gate insulating film. Furthermore, the transistor 82b has its source electrode 8b connected to an extraction electrode 47s, and the extraction electrode 47s and the retention capacitor wire Csn are connected to each other via a contact hole 91s. The extraction electrode 47s has a part overlapping the pixel electrode 17a via the interlayer insulating film and a part overlapping the pixel electrode 17b via the interlayer insulating film.

Meanwhile, the transistor 12A has its drain electrode 9A connected to an extraction electrode 37A, and the extraction electrode 37A and the pixel electrode 17B are connected to each other via a contact hole 11B. The extraction electrode 37A has a part overlapping the retention capacitor wire Csn via the gate insulating film and a part overlapping the pixel electrode 17A via the interlayer insulating film. Meanwhile, the transistor 82B has its drain electrode 9B connected to an extraction electrode 27B, and the extraction electrode 27B and the pixel electrode 17A are connected to each other via a contact hole 11A. The extraction electrode 27B has a part overlapping the pixel electrode 17B via the interlayer insulating film. Furthermore, the transistor 82B has its source electrode 8B connected to an extraction electrode 47S, and the extraction electrode 47S and the retention capacitor wire Csn are connected to each other via a contact hole 91S. The extraction electrode 47S has a part overlapping the retention capacitor wire Csn via the gate insulating film.

It should be noted here that the coupling capacitor CAB (see Fig. 7) is formed in the overlap between the extraction electrode 37A and the pixel electrode 17A and in the overlap between the extraction electrode 27B and the pixel electrode 17B, that a retention capacitor csA (see Fig. 7) is formed mostly in the overlap between the extraction electrode 27B and the retention capacitor wire Csn, and that a retention capacitor csB (see Fig. 1) is formed mostly in the overlap between the extraction electrode 37A and the retention capacitor wire Csn and in the overlap between the extraction electrode 47S and the pixel electrode 17B.

Although, in the liquid crystal panel 5b of Fig. 10, the retention capacitor wires are formed in the same layer as the scanning signal lines and the sub-signal lines and extend in the row-wise direction (in the transverse direction in the drawing), this does not imply any limitation. The retention capacitor wires, to which a constant potential is supplied, may be formed in the same layer (metal layer) as the data signal lines and extend in the column-wise direction (in the longitudinal direction in the drawing).

For example, as in Fig. 37, a retention capacitor wire Csm may be provided between the data signal lines Sx and Sy, and a retention capacitor wire Cs(m+1) may be provided between the data signal lines SX and SY. The retention capacitor wire Csm is disposed, for example, under a vertical line extending through the center of each of the pixel electrodes 17a, 17b, 17c, and 17d arranged in tandem (in the column-wise direction) (in the same layer as the data signal lines Sx and Sy), and the retention capacitor wire Cs(m+1) is disposed, for example, under a vertical line extending through the center of each of the pixel electrodes 17A, 17B, 17C, and 17D arranged in tandem (in the column-wise direction) (in the same layer as the data signal lines SX and SY).

It should be noted here that the extraction electrode 37a from the transistor 12a has a part connected the pixel electrode 17a through a contact hole and a part overlapping the pixel electrode 17b, that part of the sub-signal line gn functions as the gate electrode of the transistor 82b and part of the retention capacitor wire Csm functions as the source electrode of the transistor 82b, and that the transistor 82b has its drain electrode connected to the pixel electrode 17b via an extraction electrode and a contact hole.

Further, the extraction electrode 37A from the transistor 12A has a part connected the pixel electrode 17B through a contact hole and a part overlapping the pixel electrode 17A, that part of the sub-signal line gn functions as the gate electrode of the transistor 82B and part of the retention capacitor wire Cs(m+1) functions as the source electrode of the transistor 82B, and that the transistor 82B has its drain electrode connected to the pixel electrode 17A via an extraction electrode and a contact hole. Moreover, a retention capacitor is formed between the retention capacitor wire Csm and each of the pixel electrodes 17a, 17b, 17c, and 17d, and a retention capacitor is formed between the retention capacitor wire Cs(m+1) and each of the pixel electrodes 17A, 17B, 17C, and 17D.

The foregoing configuration makes it possible to shorten the length of each extraction electrode extracted from a transistor to be connected to a sub-signal line, thus achieving an increase in aperture ratio. Further, the foregoing configuration has a merit of eliminating the need to form such a contact hole as to pass through the gate insulating film.

### [Embodiment 2]

Fig. 11 is an equivalent circuit diagram showing part of a liquid crystal panel 5c according to the present embodiment. The liquid crystal panel 5c differs from the liquid crystal panel 5a (see Fig. 1) in that each pixel contains two pixel electrodes connected to a retention capacitor wire via separate transistors. Except for this point, the liquid crystal panel 5c is identical to the liquid crystal panel 5a. That is, the liquid crystal panel 5c includes rows and columns of pixels each containing two pixel electrodes connected to each other via a capacitor, with each data signal line extending in a column-wise direction, each of the columns of pixels being provided with two data signal lines corresponding thereto, each of the rows of pixels being provided with a single scanning line and a single sub-signal line both corresponding thereto, only one of the two pixel electrodes of each of the pixels belonging to the columns of pixels and the rows of pixels being connected to either of the two data signal lines via a transistor connected to the scanning signal line, the two pixel electrodes being connected to a retention capacitor wire via separate transistors connected to the sub-signal line.

For example, the pixel 101 has two pixel electrodes 17a and 17b connected to each other via a capacitor Cab and arranged in this order in the scanning direction (column-wise direction), with the pixel electrode 17a connected to the drain electrode of a transistor 12a connected to the scanning signal line Gn, with the pixel electrode 17a connected to the drain electrode of a transistor 82a connected to the sub-signal line gn, and with the pixel electrode 17b connected to the drain electrode of a transistor 82b connected to the sub-signal line gn, and the transistor 12a has its source electrode connected to the data signal line Sx and the transistors 82a and 82b have their respective source electrodes connected to a retention capacitor wire Csn. Formed between the pixel electrode 17a and a common electrode (counter electrode) com is a liquid crystal capacitor Cla. Formed between the pixel electrode 17b and the common electrode (counter electrode) com is a liquid crystal capacitor Clb.

Further, the pixel 102, which is adjacent to the pixel 101 in the column-wise direction, has two pixel electrodes 17c and 17d connected to each other via a capacitor Ccd and arranged in this order in the scanning direction (column-wise direction), with the pixel electrode 17c connected to the drain electrode of a transistor 12c connected to the scanning signal line G(n+1), with the pixel electrode 17c connected to the drain electrode of a transistor 82c connected to the sub-signal line g(n+1), and with the pixel electrode 17d connected to the drain electrode of a transistor 82d connected to the sub-signal line g(n+1), and the transistor 12c has its source electrode connected to the data signal line Sy and the transistors 82c and 82d have their respective source electrodes connected to a retention capacitor wire Cs(n+1). Formed between the pixel electrode 17c and the common electrode (counter electrode) com is a liquid crystal capacitor Clc. Formed between the pixel electrode 17d and the common electrode (counter electrode) com is a liquid crystal capacitor Cld.

Further, the pixel 105, which is adjacent to the pixel 101 in the row-wise direction, has two pixel electrodes 17A and 17B connected to each other via a capacitor CAB and arranged in this order in the scanning direction (column-wise direction), with the pixel electrode 17A connected to the drain electrode of a transistor 12A connected to the scanning signal line Gn, with the pixel electrode 17A connected to the drain electrode of a transistor 82A connected to the sub-signal line gn, and with the pixel electrode 17B connected to the drain electrode of a transistor 82B connected to the sub-signal line gn, and the transistor 12A has its source electrode connected to the data signal line SX and the transistors 82A and 82B have their respective source electrodes connected to the retention capacitor wire Csn. Formed between the pixel electrode 17A and the common electrode (counter electrode) com is a liquid crystal capacitor C1A. Formed between the pixel electrode 17B and the common electrode (counter electrode) com is a liquid crystal capacitor C1B.

Further, the pixel 106, which is adjacent to the pixel 102 in the row-wise direction, has two pixel electrodes 17C and 17D connected to each other via a capacitor CCD and arranged in this order in the scanning direction (column-wise direction), with the pixel electrode 17C connected to the drain electrode of a transistor 12C connected to the scanning signal line G(n+1), with the pixel electrode 17C connected to the drain electrode of a transistor 82C connected to the sub-signal line g(n+1), and with the pixel electrode 17D connected to the drain electrode of a transistor 82D connected to the sub-signal line g(n+1), and the transistor 12C has its source electrode connected to the data signal line SY and the transistors 82C and 82D have their respective source electrodes connected to the retention capacitor wire Cs(n+1). Formed between the pixel electrode 17C and the common electrode (counter electrode) com is a liquid crystal capacitor C1C. Formed between the pixel electrode 17D and the common electrode (counter electrode) com is a liquid crystal capacitor C1D.

Fig. 12 is a schematic view showing a method for driving part of the liquid crystal panel 5c (eight rows of pixels including the four rows of pixels of Fig. 11) for every single horizontal scanning period. Fig. 13 is a timing chart explaining the driving method (for two frames). It should be noted that the scanning signal lines, the sub-signal lines, and the data signal line are driven by the same method as that described in Figs. 2 and 3.

For example, let it be assumed that there are three consecutive horizontal scanning periods H1 to H3. During H1, the two scanning signal lines Gn and G(n+1) and the two sub-signal lines g(n+2) and g(n+3) are selected (made active). With this, as shown in Figs. 11 through 13, a positive data signal is written to the pixel electrode 17a connected to the scanning signal Gn and the data signal line Sx via the transistor, and a negative data signal is written to the pixel electrode 17A connected to the scanning signal Gn and the data signal line SX via the transistor. A negative data signal is written to the pixel electrode 17c connected to the scanning signal G(n+1) and the data signal line Sy via the transistor, and a positive data signal is written to the pixel electrode 17C connected to the scanning signal G(n+1) and the data signal line SY via the transistor. The pixel electrodes 17e, 17E, 17f, and 17F connected to the sub-signal line g(n+2) and the retention capacitor wire Cs(n+2) via the transistors and the pixel electrodes 17g, 17G, 17h, and 17H connected to the sub-signal line g(n+3) and the retention capacitor wire Cs(n+3) via the transistors are refreshed to the potentials of the respective retention capacitor wires. It should be noted that since the pixel electrode 17b is connected to the pixel electrode 17a via the coupling capacitor Cab, the pixel electrode 17b is not higher in voltage (potential difference based on the amplitude center of the data signal) than the pixel electrode 17a. That is, the luminance of a subpixel corresponding to the pixel electrode 17b is not higher than the luminance of a subpixel corresponding to the pixel electrode 17a. Similarly, the pixel electrode 17B is not higher in voltage than the pixel electrode 17A. The pixel electrode 17d is not higher in voltage than the pixel electrode 17c. The pixel electrode 17D is not higher in voltage than the pixel electrode 17C.

During H2, the two scanning signal lines G(n+2) and G(n+3) and the two sub-signal lines g(n+4) and g(n+5) are selected (made active). With this, as shown in Figs. 11 through 13, a positive data signal is written to the pixel electrode 17e connected to the scanning signal G(n+2) and the data signal line Sx via the transistor, and a negative data signal is written to the pixel electrode 17E connected to the scanning signal G(n+2) and the data signal line SX via the transistor. A negative data signal is written to the pixel electrode 17g connected to the scanning signal G(n+3) and the data signal line Sy via the transistor, and a positive data signal is written to the pixel electrode 17G connected to the scanning signal G(n+3) and the data signal line SY via the transistor. The pixel electrodes connected to the sub-signal line g(n+4) and the retention capacitor wire Cs(n+4) via transistors and the pixel electrodes connected to the sub-signal line g(n+5) and the retention capacitor wire Cs(n+5) via transistors are refreshed to the potentials of the respective retention capacitor wires. It should be noted that since the pixel electrode 17f is connected to the pixel electrode 17e via the coupling capacitor Cef, the pixel electrode 17f is not higher in voltage (potential difference based on the amplitude center of the data signal) than the pixel electrode 17e. That is, the luminance of a subpixel corresponding to the pixel electrode 17f is not higher than the luminance of a subpixel corresponding to the pixel electrode 17e. Similarly, the pixel electrode 17F is not higher in voltage than the pixel electrode 17E. The pixel electrode 17h is not higher in voltage than the pixel electrode 17g. The pixel electrode 17H is not higher in voltage than the pixel electrode 17G.

During H3, the two scanning signal lines G(n+4) and G(n+5) and the two sub-signal lines g(n+6) and g(n+7) are selected (made active). With this, as shown in Figs. 2 and 3, a positive data signal is written to the pixel electrode connected to the scanning signal G(n+4) and the data signal line Sx via a transistor, and a negative data signal is written to the pixel electrode connected to the scanning signal G(n+4) and the data signal line SX via a transistor. A negative data signal is written to the pixel electrode connected to the scanning signal G(n+5) and the data signal line Sy via a transistor, and a positive data signal is written to the pixel electrode connected to the scanning signal G(n+5) and the data signal line SY via a transistor. The pixel electrodes connected to the sub-signal line g(n+6) and the retention capacitor wire Cs(n+6) via transistors and the pixel electrodes connected to the sub-signal line g(n+7) and the retention capacitor wire Cs(n+7) via transistors are refreshed to the potentials of the respective retention capacitor wires.

For the reasons stated above, as shown in Fig. 12, in the case of a solid halftone display, bright and dark subpixels are alternately arranged in the column of pixels corresponding to the data signal lines Sx and Sy such that a bright subpixel, a dark subpixel, a bright subpixel, a dark subpixel, and so on are arranged in this order, and dark and bright subpixels are alternately arranged in the column of pixels corresponding to the data signal lines SX and SY such that a dark subpixel, a bright subpixel, a dark subpixel, a bright subpixel, and so on are arranged in this order.

Thus, in addition to the effects brought about by the liquid crystal panel 5a, the liquid crystal panel 5c brings about such an effect that the two pixel electrodes contained in each pixel are refreshed (discharged) to the potential of the retention capacitor wire before a data signal is written to one (which corresponds to a pixel electrode connected to a data signal line via a transistor, i.e., to a bright subpixel) of the two pixel electrodes, so that the luminance of the bright and dark subpixels can be properly controlled.

Fig. 14 is a plan view showing an example of a configuration of part of the liquid crystal panel 5c shown in Fig. 11. Although the liquid crystal panel 5c shown in Fig. 14 is identical to the liquid crystal panel 5a shown in Fig. 4 in terms of the disposition of the data signal lines, the scanning signal lines, the sub-signal lines, the retention capacitor wires, and the pixels (and the pixel electrodes contained in the pixels), the two pixel electrodes of each pixel are each connected to a retention capacitor wire via separate transistors.

For example, the transistor 12a has its drain electrode 9a connected to an extraction electrode 37a, and the extraction electrode 37a and the pixel electrode 17a are connected to each other via a contact hole 11a. The extraction electrode 37a has a part overlapping the retention capacitor wire Csn via a gate insulating film and a part overlapping the pixel electrode 17b via an interlayer insulating film. Further, the transistor 82b has its drain electrode connected to an extraction electrode 27b, and the extraction electrode 27b and the pixel electrode 17b are connected to each other via a contact hole 11b. The extraction electrode 27b has a part overlapping the retention capacitor wire Csn via the gate insulating film. Further, the transistor 82a has its drain electrode connected to an extraction electrode 67a, and the extraction electrode 67a and the pixel electrode 17a are connected to each other via a contact hole 61a. The extraction electrode 67a has a part overlapping the retention capacitor wire Csn via the gate insulating film and a part overlapping the pixel electrode 17b via the interlayer insulating film. Furthermore, the transistors 82a and 82b have their common source electrode 9s connected to an extraction electrode 47s, and the extraction electrode 47s and the retention capacitor wire Csn are connected to each other via a contact hole 91s. The extraction electrode 47s has a part overlapping the pixel electrode 17a via the interlayer insulating film and a part overlapping the pixel electrode 17b via the interlayer insulating film.

It should be noted here that the coupling capacitor Cab (see Fig. 11) is formed in the overlap between the extraction electrode 37a and the pixel electrode 17b and in the overlap between the extraction electrode 67a and the pixel electrode 17b, that a retention capacitor csa (see Fig. 11) is formed mostly in the overlap between the extraction electrode 37a and the retention capacitor wire Csn, in the overlap between the extraction electrode 47s and the pixel electrode 17a, and in the overlap between the extraction electrode 67a and the retention capacitor wire Csn, and that a retention capacitor csb (see Fig. 11) is formed mostly in the overlap between the extraction electrode 27b and the retention capacitor wire Csn and in the overlap between the extraction electrode 47s and the pixel electrode 17b.

For example, the transistor 12A has its drain electrode 9A connected to an extraction electrode 37A, and the extraction electrode 37A and the pixel electrode 17A are connected to each other via a contact hole 11A. The extraction electrode 37A has a part overlapping the retention capacitor wire Csn via the gate insulating film and a part overlapping the pixel electrode 17B via the interlayer insulating film. Further, the transistor 82B has its drain electrode connected to an extraction electrode 27B, and the extraction electrode 27B and the pixel electrode 17B are connected to each other via a contact hole 11B. The extraction electrode 27B has a part overlapping the retention capacitor wire Csn via the gate insulating film. Further, the transistor 82A has its drain electrode connected to an extraction electrode 67A, and the extraction electrode 67A and the pixel electrode 17A are connected to each other via a contact hole 61A. The extraction electrode 67A has a part overlapping the retention capacitor wire Csn via the gate insulating film and a part overlapping the pixel electrode 17B via the interlayer insulating film. Furthermore, the transistors 82A and 82B have their common source electrode 9S connected to an extraction electrode 47S, and the extraction electrode 47S and the retention capacitor wire Csn are connected to each other via a contact hole 91S. The extraction electrode 47S has a part overlapping the pixel electrode 17A via the interlayer insulating film and a part overlapping the pixel electrode 17B via the interlayer insulting film.

It should be noted here that the coupling capacitor CAB (see Fig. 11) is formed in the overlap between the extraction electrode 37A and the pixel electrode 17B and in the overlap between the extraction electrode 67A and the pixel electrode 17B, that a retention capacitor csA (see Fig. 11) is formed mostly in the overlap between the extraction electrode 37A and the retention capacitor wire Csn, in the overlap between the extraction electrode 47s and the pixel electrode 17A, and in the overlap between the extraction electrode 67A and the retention capacitor wire Csn, and that a retention capacitor csB (see Fig. 11) is formed mostly in the overlap between the extraction electrode 27B and the retention capacitor wire Csn and in the overlap between the extraction electrode 47s and the pixel electrode 17B.

Fig. 15 is a circuit diagram showing a configuration of a liquid crystal panel 5d according to the present embodiment. The liquid crystal panel 5d differs from the liquid crystal panel 5c (see Fig. 11) in that two pixel electrodes connected to data signal lines via separate transistors, respectively, and facing each other diagonally within the same row of pixels are connected to an identical scanning signal line via the separate transistors. Except for this point, the liquid crystal panel 5d is identical to the liquid crystal panel 5a.

For example, the pixel 101 has two pixel electrodes 17a and 17b connected to each other via a capacitor Cab and arranged in this order in the scanning direction (column-wise direction), with the pixel electrode 17a connected to the drain electrode of a transistor 12a connected to the scanning signal line Gn, with the pixel electrode 17a connected to the drain electrode of a transistor 82a connected to the sub-signal line gn, and with the pixel electrode 17b connected to the drain electrode of a transistor 82b connected to the sub-signal line gn, and the transistor 12a has its source electrode connected to the data signal line Sx and the transistors 82a and 82b have their respective source electrodes connected to a retention capacitor wire Csn. Meanwhile, the pixel 105, which is adjacent to the pixel 101 in the row-wise direction, has two pixel electrodes 17A and 17B connected to each other via a capacitor CAB and arranged in this order in the scanning direction (column-wise direction), with the pixel electrode 17B connected to the drain electrode of a transistor 12A connected to the scanning signal line Gn, with the pixel electrode 17A connected to the drain electrode of a transistor 82A connected to the sub-signal line gn, and with the pixel electrode 17B connected to the drain electrode of a transistor 82B connected to the sub-signal line gn, and the transistor 12A has its source electrode connected to the data signal line SX and the transistors 82A and 82B have their respective source electrodes connected to the retention capacitor wire Csn. That is, the pixel electrodes 17a and 17B, which face each other diagonally within the same row of pixels, are connected to the same scanning signal line Gn via the transistors 12a and 12A. Similarly, the pixel electrodes 17c and 17D, which face each other diagonally within the same row of pixels, are connected to the same scanning signal line G(n+1) via the transistors 12c and 12C. Similarly, the pixel electrodes 17e and 17F, which face each other diagonally within the same row of pixels, are connected to the same scanning signal line G(n+2) via the transistors 12e and 12E. Similarly, the pixel electrodes 17g and 17H, which face each other diagonally within the same row of pixels, are connected to the same scanning signal line G(n+3) via the transistors 12g and 12G.

Fig. 16 is a schematic view showing a method for driving part of the liquid crystal panel 5d (eight rows of pixels including the four rows of pixels of Fig. 15) for every single horizontal scanning period. Fig. 17 is a timing chart explaining the driving method (for two frames). It should be noted that the scanning signal lines, the sub-signal lines, and the data signal line are driven by the same method as that described in Figs. 2 and 3.

For example, during the horizontal scanning period H1, the two scanning signal lines Gn and G(n+1) and the two sub-signal lines g(n+2) and g(n+3) are selected (made active). With this, as shown in Figs. 15 through 17, a positive data signal is written to the pixel electrode 17a connected to the scanning signal Gn and the data signal line Sx via the transistor, and a negative data signal is written to the pixel electrode 17B connected to the scanning signal Gn and the data signal line SX via the transistor. A negative data signal is written to the pixel electrode 17c connected to the scanning signal G(n+1) and the data signal line Sy via the transistor, and a positive data signal is written to the pixel electrode 17D connected to the scanning signal G(n+1) and the data signal line SY via the transistor. The pixel electrodes 17e, 17E, 17f, and 17F connected to the sub-signal line g(n+2) and the retention capacitor wire Cs(n+2) via the transistors and the pixel electrodes 17g, 17h, 17G, and 17H connected to the sub-signal line g(n+3) and the retention capacitor wire Cs(n+3) via the transistors are refreshed to the potentials of the respective retention capacitor wires. It should be noted that since the pixel electrode 17b is connected to the pixel electrode 17a via the coupling capacitor Cab, the pixel electrode 17b is not higher in voltage (potential difference based on the amplitude center of the data signal) than the pixel electrode 17a. That is, the luminance of a subpixel corresponding to the pixel electrode 17b is not higher than the luminance of a subpixel corresponding to the pixel electrode 17a. Similarly, the pixel electrode 17A is not higher in voltage than the pixel electrode 17B. The pixel electrode 17d is not higher in voltage than the pixel electrode 17c. The pixel electrode 17C is not higher in voltage than the pixel electrode 17D.

During the horizontal scanning period H2, the two scanning signal lines G(n+2) and G(n+3) and the two sub-signal lines g(n+4) and g(n+5) are selected (made active). With this, as shown in Figs. 15 through 17, a positive data signal is written to the pixel electrode 17e connected to the scanning signal G(n+2) and the data signal line Sx via the transistor, and a negative data signal is written to the pixel electrode 17F connected to the scanning signal G(n+2) and the data signal line SX via the transistor. A negative data signal is written to the pixel electrode 17g connected to the scanning signal G(n+3) and the data signal line Sy via the transistor, and a positive data signal is written to the pixel electrode 17H connected to the scanning signal G(n+3) and the data signal line SY via the transistor. The pixel electrodes connected to the sub-signal line g(n+4) and the retention capacitor wire Cs(n+4) via transistors and the pixel electrodes connected to the sub-signal line g(n+5) and the retention capacitor wire Cs(n+5) via transistors are refreshed to the potentials of the respective retention capacitor wires. It should be noted that since the pixel electrode 17f is connected to the pixel electrode 17e via the coupling capacitor Cef, the pixel electrode 17f is not higher in voltage (potential difference based on the amplitude center of the data signal) than the pixel electrode 17e. That is, the luminance of a subpixel corresponding to the pixel electrode 17f is not higher than the luminance of a subpixel corresponding to the pixel electrode 17e. Similarly, the pixel electrode 17E is not higher in voltage than the pixel electrode 17F. The pixel electrode 17h is not higher in voltage than the pixel electrode 17g. The pixel electrode 17G is not higher in voltage than the pixel electrode 17H.

For the reasons stated above, as shown in Fig. 16, in the case of a solid halftone display, bright and dark subpixels are alternately arranged in the column of pixels corresponding to the data signal lines Sx and Sy such that a bright subpixel, a dark subpixel, a bright subpixel, a dark subpixel, and so on are arranged in this order, and dark and bright subpixels are alternately arranged in the column of pixels corresponding to the data signal lines SX and SY such that a dark subpixel, a bright subpixel, a dark subpixel, a bright subpixel, and so on are arranged in this order.

Thus, in addition to the effects brought about by the liquid crystal panel 5c, the liquid crystal panel 5d brings about an effect of making linear unevenness less visible because, in the case of a solid halftone display, bright and dark subpixels are alternately arranged (disposed in a checkered pattern) both in the row-wise direction and the column-wise direction.

Fig. 18 is a plan view showing an example of a configuration of part of the liquid crystal panel 5d shown in Fig. 15. Although the liquid crystal panel 5d shown in Fig. 18 is identical to the liquid crystal panel 5c shown in Fig. 14 in terms of the disposition of the data signal lines, the scanning signal lines, the sub-signal lines, the retention capacitor wires, and the pixel electrodes, there is a difference in connection between an extraction electrode extracted from the drain electrode of a transistor connected to a scanning signal line in the column of pixels corresponding to the data signal lines SX and SY and the pixel electrodes.

For example, the transistor 12a has its drain electrode 9a connected to an extraction electrode 37a, and the extraction electrode 37a and the pixel electrode 17a are connected to each other via a contact hole 11a. The extraction electrode 37a has a part overlapping the retention capacitor wire Csn via a gate insulating film and a part overlapping the pixel electrode 17b via an interlayer insulating film. Further, the transistor 82b has its drain electrode connected to an extraction electrode 27b, and the extraction electrode 27b and the pixel electrode 17b are connected to each other via a contact hole 11b. The extraction electrode 27b has a part overlapping the retention capacitor wire Csn via the gate insulating film. Further, the transistor 82a has its drain electrode connected to an extraction electrode 67a, and the extraction electrode 67a and the pixel electrode 17a are connected to each other via a contact hole 61 a. The extraction electrode 67a has a part overlapping the retention capacitor wire Csn via the gate insulating film and a part overlapping the pixel electrode 17b via the interlayer insulating film. Furthermore, the transistors 82a and 82b have their common source electrode 9s connected to an extraction electrode 47s, and the extraction electrode 47s and the retention capacitor wire Csn are connected to each other via a contact hole 91s. The extraction electrode 47s has a part overlapping the pixel electrode 17a via the interlayer insulating film and a part overlapping the pixel electrode 17b via the interlayer insulating film.

It should be noted here that the coupling capacitor Cab (see Fig. 15) is formed in the overlap between the extraction electrode 37a and the pixel electrode 17b and in the overlap between the extraction electrode 67a and the pixel electrode 17b, that a retention capacitor csa (see Fig. 15) is formed mostly in the overlap between the extraction electrode 37a and the retention capacitor wire Csn, in the overlap between the extraction electrode 47s and the pixel electrode 17a, and in the overlap between the extraction electrode 67a and the retention capacitor wire Csn, and that a retention capacitor csb (see Fig. 15) is formed mostly in the overlap between the extraction electrode 27b and the retention capacitor wire Csn and in the overlap between the extraction electrode 47s and the pixel electrode 17b.

Further, the transistor 12A has its drain electrode 9A connected to an extraction electrode 37A, and the extraction electrode 37A and the pixel electrode 17B are connected to each other via a contact hole 11A. The extraction electrode 37A has a part overlapping the retention capacitor wire Csn via the gate insulating film and a part overlapping the pixel electrode 17A via the interlayer insulating film. Further, the transistor 82B has its drain electrode connected to an extraction electrode 27B, and the extraction electrode 27B and the pixel electrode 17B are connected to each other via a contact hole 11B. The extraction electrode 27B has a part overlapping the retention capacitor wire Csn via the gate insulating film. Further, the transistor 82A has its drain electrode connected to an extraction electrode 67A, and the extraction electrode 67A and the pixel electrode 17A are connected to each other via a contact hole 61A. The extraction electrode 67A has a part overlapping the retention capacitor wire Csn via the gate insulating film and a part overlapping the pixel electrode 17B via the interlayer insulating film. Furthermore, the transistors 82A and 82B have their common source electrode 9S connected to an extraction electrode 47S, and the extraction electrode 47S and the retention capacitor wire Csn are connected to each other via a contact hole 91S. The extraction electrode 47S has a part overlapping the pixel electrode 17A via the interlayer insulating film and a part overlapping the pixel electrode 17B via the interlayer insulting film.

It should be noted here that the coupling capacitor CAB (see Fig. 15) is formed in the overlap between the extraction electrode 37A and the pixel electrode 17A and in the overlap between the extraction electrode 67A and the pixel electrode 17B, that a retention capacitor csA (see Fig. 15) is formed mostly in the overlap between the extraction electrode 47s and the pixel electrode 17A and in the overlap between the extraction electrode 67A and the retention capacitor wire Csn, and that a retention capacitor csB (see Fig. 15) is formed mostly in the overlap between the extraction electrode 27B and the retention capacitor wire Csn and in the overlap between the extraction electrode 47s and the pixel electrode 17B. Although, in the liquid crystal panel 5d of Fig. 18, the retention capacitor wires are formed in the same layer as the scanning signal lines and the sub-signal lines and extend in the row-wise direction (in the transverse direction in the drawing), this does not imply any limitation. The retention capacitor wires, to which a constant potential is supplied, may be formed in the same layer (metal layer) as the data signal lines and extend in the column-wise direction (in the longitudinal direction in the drawing).

For example, as in Fig. 38, a retention capacitor wire Csm may be provided between the data signal lines Sx and Sy, and a retention capacitor wire Cs(m+1) may be provided between the data signal lines SX and SY. The retention capacitor wire Csm is disposed, for example, under a vertical line extending through the center of each of the pixel electrodes 17a, 17b, 17c, and 17d arranged in tandem (in the column-wise direction) (in the same layer as the data signal lines Sx and Sy), and the retention capacitor wire Cs(m+1) is disposed, for example, under a vertical line extending through the center of each of the pixel electrodes 17A, 17B, 17C, and 17D arranged in tandem (in the column-wise direction) (in the same layer as the data signal lines SX and SY).

It should be noted here that the extraction electrode 37a from the transistor 12a has a part connected the pixel electrode 17a through a contact hole and a part overlapping the pixel electrode 17b, that part of the sub-signal line gn functions as the gate electrode of each of the transistors 82a and 82b and part of the retention capacitor wire Csm functions as the common source electrode of the transistors 82a and 82b, and that the transistor 82a has its drain electrode connected to the pixel electrode 17a via an extraction electrode and a contact hole and the transistor 82b has its drain electrode connected to the pixel electrode 17b via an extraction electrode and a contact hole.

Further, the extraction electrode 37A from the transistor 12A has a part connected the pixel electrode 17B through a contact hole and a part overlapping the pixel electrode 17A, that part of the sub-signal line gn functions as the gate electrode of each of the transistors 82A and 82B and part of the retention capacitor wire Cs(m+1) functions as the common source electrode of the transistors 82A and 82B, and that the transistor 82A has its drain electrode connected to the pixel electrode 17A via an extraction electrode and a contact hole and the transistor 82B has its drain electrode connected to the pixel electrode 17B via an extraction electrode and a contact hole. Moreover, a retention capacitor is formed between the retention capacitor wire Csm and each of the pixel electrodes 17a, 17b, 17c, and 17d, and a retention capacitor is formed between the retention capacitor wire Cs(m+1) and each of the pixel electrodes 17A, 17B, 17C, and 17D.

The foregoing configuration makes it possible to shorten the length of each extraction electrode extracted from a transistor to be connected to a sub-signal line, thus achieving an increase in aperture ratio. Further, the foregoing configuration has a merit of eliminating the need to form such a contact hole as to pass through the gate insulating film.

### [Embodiment 3]

Fig. 19 is an equivalent circuit diagram showing part of a liquid crystal panel 5e according to the present embodiment. The liquid crystal panel 5e differs from the liquid crystal panel 5c (see Fig. 11) in that each column of pixels is provided with a single data signal line corresponding thereto. Except for this point, the liquid crystal panel 5e is identical to the liquid crystal panel 5c. That is, the liquid crystal panel 5e includes rows and columns of pixels each containing two pixel electrodes connected to each other via a capacitor, with each data signal line extending in a column-wise direction, each of the columns of pixels being provided with a single data signal line corresponding thereto, each of the rows of pixels being provided with a single scanning line and a single sub-signal line both corresponding thereto, only one of the two pixel electrodes of each of the pixels belonging to the columns of pixels and the rows of pixels being connected to either of the two data signal lines via a transistor connected to the scanning signal line, the two pixel electrodes being connected to a retention capacitor wire via separate transistors connected to the sub-signal line.

For example, the pixel 101 has two pixel electrodes 17a and 17b connected to each other via a capacitor Cab and arranged in this order in the scanning direction (column-wise direction), with the pixel electrode 17a connected to the drain electrode of a transistor 12a connected to the scanning signal line Gn, with the pixel electrode 17a connected to the drain electrode of a transistor 82a connected to the sub-signal line gn, and with the pixel electrode 17b connected to the drain electrode of a transistor 82b connected to the sub-signal line gn, and the transistor 12a has its source electrode connected to the data signal line Sx and the transistors 82a and 82b have their respective source electrodes connected to a retention capacitor wire Csn. Formed between the pixel electrode 17a and a common electrode (counter electrode) com is a liquid crystal capacitor Cla. Formed between the pixel electrode 17b and the common electrode (counter electrode) com is a liquid crystal capacitor Clb.

Further, the pixel 102, which is adjacent to the pixel 101 in the column-wise direction, has two pixel electrodes 17c and 17d connected to each other via a capacitor Ccd and arranged in this order in the scanning direction (column-wise direction), with the pixel electrode 17c connected to the drain electrode of a transistor 12c connected to the scanning signal line G(n+1), with the pixel electrode 17c connected to the drain electrode of a transistor 82c connected to the sub-signal line g(n+1), and with the pixel electrode 17d connected to the drain electrode of a transistor 82d connected to the sub-signal line g(n+1), and the transistor 12c has its source electrode connected to the data signal line Sx and the transistors 82c and 82d have their respective source electrodes connected to a retention capacitor wire Cs(n+1). Formed between the pixel electrode 17c and the common electrode (counter electrode) com is a liquid crystal capacitor Clc. Formed between the pixel electrode 17d and the common electrode (counter electrode) com is a liquid crystal capacitor Cld.

Further, the pixel 105, which is adjacent to the pixel 101 in the row-wise direction, has two pixel electrodes 17A and 17B connected to each other via a capacitor CAB and arranged in this order in the scanning direction (column-wise direction), with the pixel electrode 17A connected to the drain electrode of a transistor 12A connected to the scanning signal line Gn, with the pixel electrode 17A connected to the drain electrode of a transistor 82A connected to the sub-signal line gn, and with the pixel electrode 17B connected to the drain electrode of a transistor 82B connected to the sub-signal line gn, and the transistor 12A has its source electrode connected to the data signal line SX and the transistors 82A and 82B have their respective source electrodes connected to the retention capacitor wire Csn. Formed between the pixel electrode 17A and the common electrode (counter electrode) com is a liquid crystal capacitor C1A. Formed between the pixel electrode 17B and the common electrode (counter electrode) com is a liquid crystal capacitor C1B.

Further, the pixel 106, which is adjacent to the pixel 102 in the row-wise direction, has two pixel electrodes 17C and 17D connected to each other via a capacitor CCD and arranged in this order in the scanning direction (column-wise direction), with the pixel electrode 17C connected to the drain electrode of a transistor 12C connected to the scanning signal line G(n+1), with the pixel electrode 17C connected to the drain electrode of a transistor 82C connected to the sub-signal line g(n+1), and with the pixel electrode 17D connected to the drain electrode of a transistor 82D connected to the sub-signal line g(n+1), and the transistor 12C has its source electrode connected to the data signal line SX and the transistors 82C and 82D have their respective source electrodes connected to the retention capacitor wire Cs(n+1). Formed between the pixel electrode 17C and the common electrode (counter electrode) com is a liquid crystal capacitor C1C. Formed between the pixel electrode 17D and the common electrode (counter electrode) com is a liquid crystal capacitor C1D.

Fig. 20 is a timing chart explaining a method for driving part (the four rows of pixels of Fig. 19) of the liquid crystal panel 5e (for two frames).

According to the driving method of Fig. 20, a single scanning signal line corresponding to a single row of pixels upstream of the scanning direction among two consecutive rows of pixels and a single sub-signal line corresponding to a single row of pixels downstream of the scanning direction among the two consecutive rows of pixels are simultaneously selected. Then, a data signal line (e.g., Sx) connected via a transistor to a pixel electrode contained in one of two pixels adjacent to each other in the column-wise direction and a data signal line (e.g., Sy) connected via a transistor to a pixel electrode contained in the other pixel are supplied with data signals opposite in polarity to each other. Furthermore, two adjacent data signal lines (e.g., Sy and SX) corresponding to different columns of pixels are supplied with data signals equal in polarity to each other. It should be noted that the polarity of a data signal that is supplied to a data signal line is reversed every single vertical scanning period (one frame period).

For example, let it be assumed that there are three consecutive horizontal scanning periods H 1 to H3. During H1, the single scanning signal line Gn and the single sub-signal line g(n+1) are selected (made active). With this, as shown in Figs. 19 and 20, a positive data signal is written to the pixel electrode 17a connected to the scanning signal Gn and the data signal line Sx via the transistor, and a negative data signal is written to the pixel electrode 17A connected to the scanning signal Gn and the data signal line SX via the transistor. The pixel electrodes 17c, 17d, 17C, and 17D connected to the sub-signal line g(n+1) and the retention capacitor wire Cs(n+1) via the transistors are refreshed to the potential of the retention capacitor wire. It should be noted that since the pixel electrode 17b is connected to the pixel electrode 17a via the coupling capacitor Cab, the pixel electrode 17b is not higher in voltage (potential difference based on the amplitude center of the data signal) than the pixel electrode 17a. That is, the luminance of a subpixel corresponding to the pixel electrode 17b is not higher than the luminance of a subpixel corresponding to the pixel electrode 17a. Similarly, the pixel electrode 17B is not higher in voltage than the pixel electrode 17A.

During H2, the single scanning signal line G(n+1) and the single sub-signal line g(n+2) are selected (made active). With this, as shown in Figs. 19 and 20, a negative data signal is written to the pixel electrode 17c connected to the scanning signal G(n+1) and the data signal line Sx via the transistor, and a positive data signal is written to the pixel electrode 17C connected to the scanning signal G(n+1) and the data signal line SX via the transistor. The pixel electrodes 17e, 17f, 17E, and 17F connected to the sub-signal line g(n+2) and the retention capacitor wire Cs(n+2) via the transistors are refreshed to the potential of the retention capacitor wire. It should be noted that since the pixel electrode 17d is connected to the pixel electrode 17c via the coupling capacitor Ccd, the pixel electrode 17d is not higher in voltage (potential difference based on the amplitude center of the data signal) than the pixel electrode 17c. That is, the luminance of a subpixel corresponding to the pixel electrode 17d is not higher than the luminance of a subpixel corresponding to the pixel electrode 17c. Similarly, the pixel electrode 17D is not higher in voltage than the pixel electrode 17C.

During H3, the single scanning signal line G(n+2) and the single sub-signal line g(n+3) are selected (made active). With this, as shown in Figs. 19 and 20, a positive data signal is written to the pixel electrode 17e connected to the scanning signal G(n+2) and the data signal line Sx via the transistor, and a negative data signal is written to the pixel electrode 17E connected to the scanning signal G(n+2) and the data signal line SX via the transistor. The pixel electrodes 17g, 17h, 17G, and 17H connected to the sub-signal line g(n+3) and the retention capacitor wire Cs(n+3) via the transistors are refreshed to the potential of the retention capacitor wire. It should be noted that since the pixel electrode 17f is connected to the pixel electrode 17e via the coupling capacitor Cef, the pixel electrode 17f is not higher in voltage (potential difference based on the amplitude center of the data signal) than the pixel electrode 17e. That is, the luminance of a subpixel corresponding to the pixel electrode 17f is not higher than the luminance of a subpixel corresponding to the pixel electrode 17e. Similarly, the pixel electrode 17F is not higher in voltage than the pixel electrode 17E.

For the reasons stated above, in the case of a solid halftone display, bright and dark subpixels are alternately arranged in the column of pixels corresponding to the data signal lines Sx and Sy such that a bright subpixel, a dark subpixel, a bright subpixel, a dark subpixel, and so on are arranged in this order, and dark and bright subpixels are alternately arranged in the column of pixels corresponding to the data signal lines SX and SY such that a dark subpixel, a bright subpixel, a dark subpixel, a bright subpixel, and so on are arranged in this order.

In a liquid crystal display device including the liquid crystal panel 5e, too, there is no pixel electrode in the pixel that is electrically floating; therefore, such problems as pixel image sticking that the capacitively-coupled pixel-division type has suffered from can be suppressed.

Moreover, since one transistor per pixel is connected to each scanning signal line, the load on each scanning signal line is reduced as compared with such a configuration as that of Fig. 40, the configuration according to the present embodiment is suitable for a large-sized high-definition liquid crystal display device and a high-speed-driven (e.g., double-speed-driven or quadruple-speed-driven) liquid crystal display device.

Furthermore, the two pixel electrodes contained in each pixel are refreshed (discharged) to the potential of the retention capacitor wire before a data signal is written to one (which corresponds to a pixel electrode connected to a data signal line via a transistor, i.e., to a bright subpixel) of the two pixel electrodes, so that the luminance of the bright and dark subpixels can be properly controlled.

Fig. 21 is a plan view showing an example of a configuration of part of the liquid crystal panel 5e shown in Fig. 19. The liquid crystal panel 5e differs from the liquid crystal panel 5c shown in Fig. 14 in that with no data signal lines Sy and SY provided, the transistor 12c has its source electrode connected to the data signal line Sx and the transistor 12C has its source electrode connected to the data signal line SX. Except for this point, the liquid crystal panel 5e is identical to the liquid crystal panel 5c.

Fig. 22 is a circuit diagram showing a configuration of a liquid crystal panel 5f according to the present embodiment. The liquid crystal panel 5f differs from the liquid crystal panel 5e (see Fig. 19) in that two pixel electrodes connected to data signal lines via separate transistors, respectively, and facing each other diagonally within the same row of pixels are connected to an identical scanning signal line via the separate transistors. Except for this point, the liquid crystal panel 5f is identical to the liquid crystal panel 5e.

Fig. 23 is a timing chart explaining a method for driving part (the four rows of pixels of Fig. 22) of the liquid crystal panel 5f (for two frames).

For example, during H1, the single scanning signal line Gn and the single sub-signal line g(n+1) are selected (made active). With this, a positive data signal is written to the pixel electrode 17a connected to the scanning signal Gn and the data signal line Sx via the transistor, and a negative data signal is written to the pixel electrode 17B connected to the scanning signal Gn and the data signal line SX via the transistor. The pixel electrodes 17c, 17d, 17C, and 17D connected to the sub-signal line g(n+1) and the retention capacitor wire Cs(n+1) via the transistors are refreshed to the potential of the retention capacitor wire. It should be noted that since the pixel electrode 17b is connected to the pixel electrode 17a via the coupling capacitor Cab, the pixel electrode 17b is not higher in voltage (potential difference based on the amplitude center of the data signal) than the pixel electrode 17a. That is, the luminance of a subpixel corresponding to the pixel electrode 17b is not higher than the luminance of a subpixel corresponding to the pixel electrode 17a. Similarly, the pixel electrode 17A is not higher in voltage than the pixel electrode 17B.

During H2, the single scanning signal line G(n+1) and the single sub-signal line g(n+2) are selected (made active). With this, a negative data signal is written to the pixel electrode 17c connected to the scanning signal G(n+1) and the data signal line Sx via the transistor, and a positive data signal is written to the pixel electrode 17D connected to the scanning signal G(n+1) and the data signal line SX via the transistor. The pixel electrodes 17e, 17f, 17E, and 17F connected to the sub-signal line g(n+2) and the retention capacitor wire Cs(n+2) via the transistors are refreshed to the potential of the retention capacitor wire. It should be noted that since the pixel electrode 17d is connected to the pixel electrode 17c via the coupling capacitor Ccd, the pixel electrode 17d is not higher in voltage (potential difference based on the amplitude center of the data signal) than the pixel electrode 17c. That is, the luminance of a subpixel corresponding to the pixel electrode 17d is not higher than the luminance of a subpixel corresponding to the pixel electrode 17c. Similarly, the pixel electrode 17C is not higher in voltage than the pixel electrode 17D.

During H3, the single scanning signal line G(n+2) and the single sub-signal line g(n+3) are selected (made active). With this, a positive data signal is written to the pixel electrode 17e connected to the scanning signal G(n+2) and the data signal line Sx via the transistor, and a negative data signal is written to the pixel electrode 17F connected to the scanning signal G(n+2) and the data signal line SX via the transistor. The pixel electrodes 17g, 17h, 17G, and 17H connected to the sub-signal line g(n+3) and the retention capacitor wire Cs(n+3) via the transistors are refreshed to the potential of the retention capacitor wire. It should be noted that since the pixel electrode 17f is connected to the pixel electrode 17e via the coupling capacitor Cef, the pixel electrode 17f is not higher in voltage (potential difference based on the amplitude center of the data signal) than the pixel electrode 17e. That is, the luminance of a subpixel corresponding to the pixel electrode 17f is not higher than the luminance of a subpixel corresponding to the pixel electrode 17e. Similarly, the pixel electrode 17E is not higher in voltage than the pixel electrode 17F.

For the reasons stated above, in the case of a solid halftone display, bright and dark subpixels are alternately arranged in the column of pixels corresponding to the data signal lines Sx and Sy such that a bright subpixel, a dark subpixel, a bright subpixel, a dark subpixel, and so on are arranged in this order, and dark and bright subpixels are alternately arranged in the column of pixels corresponding to the data signal lines SX and SY such that a dark subpixel, a bright subpixel, a dark subpixel, a bright subpixel, and so on are arranged in this order.

Thus, in addition to the effects brought about by the liquid crystal panel 5e, the liquid crystal panel 5f brings about an effect of making linear unevenness less visible because, in the case of a solid halftone display, bright and dark subpixels are alternately arranged (disposed in a checkered pattern) both in the row-wise direction and the column-wise direction.

Fig. 24 is a plan view showing an example of a configuration of part of the liquid crystal panel 5f shown in Fig. 22. The liquid crystal panel 5f differs from the liquid crystal panel 5d shown in Fig. 18 in that with no data signal lines Sy and SY provided, the transistor 12c has its source electrode connected to the data signal line Sx and the transistor 12C has its source electrode connected to the data signal line SX. Except for this point, the liquid crystal panel 5f is identical to the liquid crystal panel 5d.

Although, in the liquid crystal panel 5f of Fig. 24, the retention capacitor wires are formed in the same layer as the scanning signal lines and the sub-signal lines and extend in the row-wise direction (in the transverse direction in the drawing), this does not imply any limitation. The retention capacitor wires, to which a constant potential is supplied, may be formed in the same layer (metal layer) as the data signal lines and extend in the column-wise direction (in the longitudinal direction in the drawing).

For example, as in Fig. 39, a retention capacitor wire Csm may be provided under a vertical line extending through the center of each of the pixel electrodes 17a, 17b, 17c, and 17d arranged in tandem (in the column-wise direction) (in the same layer as the data signal line Sx), and a retention capacitor wire Cs(m+1) may be provided under a vertical line extending through the center of each of the pixel electrodes 17A, 17B, 17C, and 17D arranged in tandem (in the column-wise direction) (in the same layer as the data signal line SX).

It should be noted here that the extraction electrode 37a from the transistor 12a has a part connected the pixel electrode 17a through a contact hole and a part overlapping the pixel electrode 17b, that part of the sub-signal line gn functions as the gate electrode of each of the transistors 82a and 82b and part of the retention capacitor wire Csm functions as the common source electrode of the transistors 82a and 82b, and that the transistor 82a has its drain electrode connected to the pixel electrode 17a via an extraction electrode and a contact hole and the transistor 82b has its drain electrode connected to the pixel electrode 17b via an extraction electrode and a contact hole.

Further, the extraction electrode 37A from the transistor 12A has a part connected the pixel electrode 17B through a contact hole and a part overlapping the pixel electrode 17A, that part of the sub-signal line gn functions as the gate electrode of each of the transistors 82A and 82B and part of the retention capacitor wire Cs(m+1) functions as the common source electrode of the transistors 82A and 82B, and that the transistor 82A has its drain electrode connected to the pixel electrode 17A via an extraction electrode and a contact hole and the transistor 82B has its drain electrode connected to the pixel electrode 17B via an extraction electrode and a contact hole. Moreover, a retention capacitor is formed between the retention capacitor wire Csm and each of the pixel electrodes 17a, 17b, 17c, and 17d, and a retention capacitor is formed between the retention capacitor wire Cs(m+1) and each of the pixel electrodes 17A, 17B, 17C, and 17D.

The foregoing configuration makes it possible to shorten the length of each extraction electrode extracted from a transistor to be connected to a sub-signal line, thus achieving an increase in aperture ratio. Further, the foregoing configuration has a merit of eliminating the need to form such a contact hole as to pass through the gate insulating film.

Although, in the liquid crystal panel 5e of Fig. 19, each of the two pixel electrodes in each pixel is connected to a retention capacitor wire via a transistor, this does not imply any limitation. As shown in a liquid crystal panel 5g of Fig. 25, only a pixel electrode not connected to a data signal line may be connected to a retention capacitor wire via a transistor. In this case, a driving method shown in Fig. 26 is employed.

Similarly, although, in the liquid crystal panel 5f of Fig. 22, each of the two pixel electrodes in each pixel is connected to a retention capacitor wire via a transistor, this does not imply any limitation. As shown in a liquid crystal panel 5h of Fig. 27, only a pixel electrode not connected to a data signal line may be connected to a retention capacitor wire via a transistor. In this case, a driving method shown in Fig. 28 is employed.

In the present embodiment, a liquid crystal display unit according to the present embodiment and a liquid crystal display device according to the present embodiment are configured in the following manner. That is, two polarizers A and B are attached to both sides of any one of the liquid crystal panels (5a to 5f), respectively, so that the polarizers A and B have their polarization axes orthogonal to each other. It should be noted that an optical compensation sheet or the like may be laminated on each of the polarizers as needed. Next, as shown in (a) of Fig. 31, drivers (gate driver 202, source driver 201) are connected. Here, an example is explained where the drivers are connected by a TCP (tape career package) method. First, ACFs (anisotropic conductive films) are temporarily pressure-bonded to terminal parts of the liquid crystal panel. Next, TCPs on which the drivers have been placed are punched out of a career tape, aligned with panel terminal electrodes, heated, and permanently pressure-bonded. After that, a circuit substrate 203 (PWB: printed wiring board) via which the driver TCPs are coupled to each other is connected to input terminals of the TCPs, whereby a liquid crystal display unit 200 is completed. After that, as shown in (b) of Fig. 31, a liquid crystal display device 210 is obtained by connecting a display control circuit 209 to each of the drivers (201 and 202) of the liquid crystal display unit via the circuit substrate 203 and integrating the liquid crystal display unit with an illuminating device (backlight unit) 204.

The term "polarity of a potential" as used in the present application means not lower a reference potential (positive) or not higher than the reference potential (negative). It should be noted here that the reference potential may be Vcom (common potential), which is the potential of the common electrode (counter electrode), or may be any other given potential.

Fig. 32 is a block diagram showing a configuration of a liquid crystal display device according to the present embodiment. As shown in Fig. 32, the liquid crystal display device includes a display section (liquid crystal panel), a source driver (SD), a gate driver (GD), and a display control circuit. The source driver drives data signal lines. The gate driver drives scanning signal lines. The display control circuit controls the source driver and the gate driver.

The display control circuit receives, from an external signal source (e.g., a tuner), a digital video signal Dv representing an image to be displayed, a horizontal synchronizing signal HSY and a vertical synchronizing signal VSY both corresponding to the digital video signal Dv, and a control signal Dc for controlling a display operation. Further, in accordance with the signals Dv, HSY, VSY, and Dc thus received, the display control circuit generates and outputs, as signals for causing the display section to display the image represented by the digital video signal Dv, a data start pulse signal SSP, a data clock signal SCK, a charge share signal sh, a digital image signal DA (signal corresponding to the video signal Dv) representing the image to be displayed, a gate start pulse signal GSP, a gate clock signal GCK, and a gate driver output control signal (scanning signal output control signal) GOE.

More specifically, after subjecting the video signal Dv to timing adjustment or the like as needed in an internal memory, the display control circuit outputs the digital image signal DA, generates the data clock signal SCK as a signal composed of pulses corresponding to each separate pixel of the image represented by the digital image signal DA, generates the data start pulse signal SSP as a signal that is at a high level (H level) for only a predetermined period of time every single horizontal scanning period in accordance with the horizontal synchronizing signal HSY, generates the gate start pulse signal GSP as a signal that is at a H level for only a predetermined period of time every one frame period (single vertical scanning period) in accordance with the vertical synchronizing signal VSY, generates the gate clock signal GCK in accordance with the horizontal synchronizing signal HSY, and generates the charge share signal sh and the gate driver output control signal GOE in accordance with the horizontal synchronizing signal HSY and the control signal Dc.

Among the signals thus generated by the display control circuit, the digital image signal DA, the charge share signal sh, a signal POL for controlling the polarity of a signal potential (data signal potential), the data start pulse signal SSP, and the data clock signal SCK are inputted to the source driver, and the gate start pulse signal GSP, the gate clock signal GCK, and the gate driver output control signal GOE are inputted to the gate driver.

In accordance with the digital image signal DA, the data clock signal SCK, the charge share signal sh, the data start pulse signal SSP, and the polarity reversal signal POL, the source driver generates for every single horizontal scanning period a sequence of analog potentials (signal potentials) corresponding to the pixel values, in each separate scanning signal line, of the image represented by the digital image signal DA, and outputs these data signals to the data signal lines (e.g., Sx and Sy).

In accordance with the gate start pulse signal GSP, the gate clock signal GCK, and the gate driver output control signal GOE, the gate driver generates gate-on-pulse signals and outputs them to the scanning signal lines, thereby selecting two scanning signal lines at a time in sequence.

Next, an example of a configuration is explained where a liquid crystal display device according to the present embodiment is applied to a television receiver. Fig. 33 is a block diagram showing a configuration of a liquid crystal display device 800 for use in a television receiver. The liquid crystal display device 800 includes a liquid crystal display unit 84, a Y/C separation circuit 80, a video chroma circuit 81, an A/D converter 82, a liquid crystal controller 83, a backlight drive circuit 85, a backlight 86, a microcomputer 87, and a gradation circuit 88. It should be noted that the liquid crystal display unit 84 is constituted by a liquid crystal panel and a source driver and a gate driver both of which serve to drive the liquid crystal panel.

In the liquid crystal display device 800 thus configured, first, the Y/C separation circuit 80 receives a composite color picture signal Scv as a television signal from an outside source and separates the composite color picture signal Scv into a luminance signal and a color signal. The video chroma circuit 81 converts the luminance signal and the color signal into an analog RGB signal corresponding to the three primary colors of light, and the A/D converter 82 further converts the analog RGB signal into a digital RGB signal. The liquid crystal controller 83 receives the digital RGB signal. Further, the Y/C separation circuit 80 extracts horizontal and vertical synchronizing signals from the composite color picture signal Scv received from the outside source, and the liquid crystal controller 83 also receives these synchronizing signals via the microcomputer 87.

The liquid crystal display unit 84 receives the digital RGB signal from the liquid crystal controller 83 at a predetermined timing together with a timing signal based on the synchronizing signals. Further, the gradation circuit 88 generates gradation potentials for each separate one of the three primary colors R, G, and B of a color display, and supplies those gradation potentials to the liquid crystal display unit 84. In the liquid crystal display unit 84, the internal source driver, the internal gate driver, and the like generate driving signals (data signal = signal potential, scanning signal, etc.) in accordance with the RGB signals, the timing signal, and the gradation potentials, and the internal liquid crystal panel displays a color image in accordance with those driving signals. It should be noted that in order for the liquid crystal display unit 84 to display an image, it is necessary to irradiate the back of the liquid crystal panel inside of the liquid crystal display unit with light. In the case of this liquid crystal display device 800, the rear surface of the liquid crystal panel is irradiated with light by the backlight drive circuit 85 driving the backlight 86 under the control of the microcomputer 87. The control of the whole system, including the foregoing processes, is carried out by the microcomputer 87. It should be noted that as the image signal (composite color picture signal) received from the outside source, a picture signal taken by a camera, a picture signal that is supplied via an Internet line, etc., as well as a picture signal based on a television broadcast, can be used. The liquid crystal display device 800 can display images based on various types of picture signal.

In a case where the liquid crystal display device 800 displays an image based on a television broadcast, the liquid crystal display device 800 has a tuner section 90 connected thereto as shown in Fig. 34, whereby a television receiver 610 according to the present embodiment is obtained. The tuner section 90 extracts a composite color picture signal Scv as a television signal by picking up, from among waves (high-frequency waves) received by an antenna (not illustrated), a signal for a channel to be received, converting the signal into an intermediate-frequency signal, and detecting the intermediate-frequency signal. The composite color picture signal Scv is inputted to the liquid crystal display device 800 as mentioned above, and the liquid crystal display device 800 displays an image based on the composite color picture signal Scv.

Fig. 35 is an exploded perspective view showing an example of a configuration of the television receiver according to the present embodiment. As shown in Fig. 35, the television receiver 601 has as its components a first housing 801 and a second housing 806 in addition to the liquid crystal display device 800, and is configured such that the liquid crystal display device 800 is enclosed by the first housing 801 and the second housing 806. The first housing 801 is provided with an opening 801 a through which an image displayed by the liquid crystal display device 800 is transmitted. Further, the second housing 806, which serves to cover the back surface of the liquid crystal display device 800, is provided with an operation circuit 805 for operating the display device 800, with a supporting member 808 attached to on the lower side of the second housing 806.

The present invention is not to be limited to the embodiments above, and an embodiment obtained by properly altering any one of the embodiments above or combining the embodiments above on the basis of common general technical knowledge is encompassed in the embodiments of the present invention.

As described above, a liquid crystal display device according to the present invention includes rows and columns of pixels each containing two pixel electrodes connected to each other via a capacitor, with each data signal line extending in a column-wise direction, each of the columns of pixels being provided with two data signal lines corresponding thereto, each of the rows of pixels being provided with a single scanning line and a single sub-signal line both corresponding thereto, one of the two pixel electrodes of each of the pixels belonging to the columns of pixels and the rows of pixels being connected to either of the two data signal lines via a transistor connected to the scanning signal line, the other pixel electrode being connected to a retention capacitor wire via a transistor connected to the sub-signal line, two scanning signal lines corresponding to two rows of pixels upstream of a scanning direction among four consecutive rows of pixels and two sub-signal lines corresponding to two rows of pixels downstream of the scanning direction among the four consecutive rows of pixels being simultaneously selected.

Since, in the liquid crystal display device according to the present invention, each pixel contains two pixel electrodes one of which is connected to a data signal line via a transistor and the other one of which is connected to a retention capacitor wire via a transistor, there is no pixel electrode in the pixel that is electrically floating. Therefore, such problems as pixel image sticking that the capacitively-coupled pixel-division type has suffered from can be suppressed.

Moreover, since one transistor per pixel is connected to each scanning signal line, the load on each scanning signal line is reduced as compared with such a configuration as that of Fig. 40, the configuration according to the present invention is suitable for a large-sized high-definition liquid crystal display device and a high-speed-driven (e.g., double-speed-driven or quadruple-speed-driven) liquid crystal display device.

The liquid crystal display device according to the present invention may be configured such that a data signal line connected via a transistor to a pixel electrode contained in one of two pixels adjacent to each other in the column-wise direction and a data signal line connected via a transistor to a pixel electrode contained in the other pixel are different from each other.

The liquid crystal display device according to the present invention may be configured such that the data signal line connected via the transistor to the pixel electrode contained in one of the two pixels adjacent to each other in the column-wise direction and the data signal line connected via the transistor to the pixel electrode contained in the other pixel are supplied with data signals opposite in polarity to each other.

The liquid crystal display device according to the present invention may be configured such that two adjacent data signal lines corresponding to different columns of pixels are supplied with data signals equal in polarity to each other.

The liquid crystal display device according to the present invention may be configured such that each of the data signal line is supplied with a data signal whose polarity is reversed every single vertical scanning period.

The liquid crystal display device according to the present invention may be configured such that: each of the pixels has its two pixel electrodes arranged in the column-wise direction; and two pixel electrodes each connected to a data signal line via a transistor and facing each other diagonally within an identical row of pixels are connected to separate transistors connected to an identical scanning signal line.

The liquid crystal display device according to the present invention may be configured such that two single scanning signal lines corresponding to a single rows of pixels are either disposed on both sides of that row of pixels or disposed in such a way as to overlap both end portions of that row of pixels.

An active-matrix substrate according to the present invention may be configured to include rows and columns of pixel regions each containing two pixel electrodes connected to each other via a capacitor, with each data signal line extending in a column-wise direction, each of the columns of pixel regions being provided with two data signal lines corresponding thereto, each of the rows of pixel regions being provided with a single scanning line and a single sub-signal line both corresponding thereto, only one of the two pixel electrodes of each of the pixels belonging to the columns of pixels and the rows of pixels being connected to either of the two data signal lines via a transistor connected to the scanning signal line, the two pixel electrodes being connected to a retention capacitor wire via separate transistors connected to the sub-signal line.

A liquid crystal display device including the active-matrix substrate may be configured such that two scanning signal lines corresponding to two rows of pixels upstream of a scanning direction among four consecutive rows of pixels and two sub-signal lines corresponding to two rows of pixels downstream of the scanning direction among the four consecutive rows of pixels are simultaneously selected.

The liquid crystal display device according to the present invention may be configured such that a data signal line connected via a transistor to a pixel electrode contained in one of two pixels adjacent to each other in the column-wise direction and a data signal line connected via a transistor to a pixel electrode contained in the other pixel are different from each other.

The liquid crystal display device according to the present invention may be configured such that the data signal line connected via the transistor to the pixel electrode contained in one of the two pixels adjacent to each other in the column-wise direction and the data signal line connected via the transistor to the pixel electrode contained in the other pixel are supplied with data signals opposite in polarity to each other.

An active-matrix substrate according to the present invention may be configured to include rows and columns of pixel regions each containing two pixel electrodes connected to each other via a capacitor, with each data signal line extending in a column-wise direction, each of the columns of pixel regions being provided with a single data signal line corresponding thereto, each of the rows of pixel regions being provided with a single scanning line and a single sub-signal line both corresponding thereto, only one of the two pixel electrodes of each of the pixels belonging to the columns of pixels and the rows of pixels being connected to the data signal line via a transistor connected to the scanning signal line, the two pixel electrodes being connected to a retention capacitor wire via separate transistors connected to the sub-signal line.

A liquid crystal display device including the active-matrix substrate may be configured such that a single scanning signal line corresponding to a single row of pixels upstream of a scanning direction among two consecutive rows of pixels and a single sub-signal line corresponding to a single row of pixels downstream of the scanning direction among the two consecutive rows of pixels are simultaneously selected.

The liquid crystal display device according to the present invention may be configured such that the retention capacitor wire is provided in a same layer as the data signal lines and extends in the column-wise direction.

The active-matrix substrate according to the present invention may be configured such that the retention capacitor wire is provided in a same layer as the data signal lines and extends in the column-wise direction.

A liquid crystal panel according to the present invention includes the active-matrix substrate. Further, a liquid crystal display unit according to the present invention includes: the liquid crystal panel; and a driver. Further, a television receiver according to the present invention includes: the liquid crystal display device; and a tuner section that receives a television broadcast.

### Industrial Applicability

A liquid crystal panel according to the present invention and an active-matrix substrate according to the present invention are suitable, for example, for a liquid crystal display television.

### Reference Signs List

- 5a to 5h: Liquid crystal panel
- 12a to 12h, 12A to 12H: Transistor
- 17a to 17h, 17A to 17H: Pixel electrode
- Sx, Sy, SX, SY: Data signal line
- Gn to G(n+7): Scanning signal line
- gn to g(n+7): Sub-signal line
- Csn to Cs(n+7): Retention capacitor wire
- 22: Gate insulating film
- 24: Semiconductor layer
- 25: Inorganic insulating film
- 26: Organic insulating film
- 84: Liquid crystal display unit
- 101 to 108: Pixel
- 601: Television receiver
- 800: Liquid crystal display device

## Claims

1. A liquid crystal display device comprising rows and columns of pixels each containing two pixel electrodes connected to each other via a capacitor, with each data signal line extending in a column-wise direction,
each of the columns of pixels being provided with two data signal lines corresponding thereto, each of the rows of pixels being provided with a single scanning line and a single sub-signal line both corresponding thereto,
one of the two pixel electrodes of each of the pixels belonging to the columns of pixels and the rows of pixels being connected to either of the two data signal lines via a transistor connected to the scanning signal line, the other pixel electrode being connected to a retention capacitor wire via a transistor connected to the sub-signal line,
two scanning signal lines corresponding to two rows of pixels upstream of a scanning direction among four consecutive rows of pixels and two sub-signal lines corresponding to two rows of pixels downstream of the scanning direction among the four consecutive rows of pixels being simultaneously selected.

2. The liquid crystal display device as set forth in claim 1, wherein a data signal line connected via a transistor to a pixel electrode contained in one of two pixels adjacent to each other in the column-wise direction and a data signal line connected via a transistor to a pixel electrode contained in the other pixel are different from each other.

3. The liquid crystal display device as set forth in claim 2, wherein the data signal line connected via the transistor to the pixel electrode contained in one of the two pixels adjacent to each other in the column-wise direction and the data signal line connected via the transistor to the pixel electrode contained in the other pixel are supplied with data signals opposite in polarity to each other.

4. The liquid crystal display device as set forth in any one of claims 1 to 3, wherein two adjacent data signal lines corresponding to different columns of pixels are supplied with data signals equal in polarity to each other.

5. The liquid crystal display device as set forth in any one of claims 1 to 4, wherein each of the data signal line is supplied with a data signal whose polarity is reversed every single vertical scanning period.

6. The liquid crystal display device as set forth in any one of claims 1 to 5, wherein:
each of the pixels has its two pixel electrodes arranged in the column-wise direction; and
two pixel electrodes each connected to a data signal line via a transistor and facing each other diagonally within an identical row of pixels are connected to separate transistors connected to an identical scanning signal line.

7. The liquid crystal display device as set forth in any one of claims 1 to 6, wherein two single scanning signal lines corresponding to a single rows of pixels are either disposed on both sides of that row of pixels or disposed in such a way as to overlap both end portions of that row of pixels.

8. An active-matrix substrate comprising rows and columns of pixel regions each containing two pixel electrodes connected to each other via a capacitor, with each data signal line extending in a column-wise direction,
each of the columns of pixel regions being provided with two data signal lines corresponding thereto, each of the rows of pixel regions being provided with a single scanning line and a single sub-signal line both corresponding thereto,
only one of the two pixel electrodes of each of the pixels belonging to the columns of pixels and the rows of pixels being connected to either of the two data signal lines via a transistor connected to the scanning signal line, the two pixel electrodes being connected to a retention capacitor wire via separate transistors connected to the sub-signal line.

9. A liquid crystal display device comprising an active-matrix substrate as set forth in claim 8.

10. The liquid crystal display device as set forth in claim 9, wherein two scanning signal lines corresponding to two rows of pixels upstream of a scanning direction among four consecutive rows of pixels and two sub-signal lines corresponding to two rows of pixels downstream of the scanning direction among the four consecutive rows of pixels are simultaneously selected.

11. The liquid crystal display device as set forth in claim 10, wherein a data signal line connected via a transistor to a pixel electrode contained in one of two pixels adjacent to each other in the column-wise direction and a data signal line connected via a transistor to a pixel electrode contained in the other pixel are different from each other.

12. The liquid crystal display device as set forth in claim 10, wherein the data signal line connected via the transistor to the pixel electrode contained in one of the two pixels adjacent to each other in the column-wise direction and the data signal line connected via the transistor to the pixel electrode contained in the other pixel are supplied with data signals opposite in polarity to each other.

13. An active-matrix substrate comprising rows and columns of pixel regions each containing two pixel electrodes connected to each other via a capacitor, with each data signal line extending in a column-wise direction,
each of the columns of pixel regions being provided with a single data signal line corresponding thereto, each of the rows of pixel regions being provided with a single scanning line and a single sub-signal line both corresponding thereto,
only one of the two pixel electrodes of each of the pixels belonging to the columns of pixels and the rows of pixels being connected to the data signal line via a transistor connected to the scanning signal line, the two pixel electrodes being connected to a retention capacitor wire via separate transistors connected to the sub-signal line.

14. A liquid crystal display device comprising an active-matrix substrate as set forth in claim 13.

15. The liquid crystal display device as set forth in claim 14, wherein a single scanning signal line corresponding to a single row of pixels upstream of a scanning direction among two consecutive rows of pixels and a single sub-signal line corresponding to a single row of pixels downstream of the scanning direction among the two consecutive rows of pixels are simultaneously selected.

16. The liquid crystal display device as set forth in claim 1, wherein the retention capacitor wire is provided in a same layer as the data signal lines and extends in the column-wise direction.

17. The active-matrix substrate as set forth in claim 8 or 13, wherein the retention capacitor wire is provided in a same layer as the data signal lines and extends in the column-wise direction.

18. A liquid crystal panel comprising an active-matrix substrate as set forth in claim 8 or 13.

19. A liquid crystal display unit comprising:
a liquid crystal panel as set forth in claim 18; and
a driver.

20. A television receiver comprising:
a liquid crystal display device as set forth in any one of claims 1, 9, and 14; and
a tuner section that receives a television broadcast.
